# EUROPÄISCHE PATENTSCHRIFT

(11) **EP 3 431 265 B1**
(45) Veröffentlichungstag und Bekanntmachung des Hinweises auf die Patenterteilung: **14.02.2024**
(21) Anmeldenummer: 18183337.7
(22) Anmeldetag: 13.07.2018
(51) Int. Cl.: B29C 65/14, E04F 21/20, B26D 3/02, B26D 7/26, B26B 5/00, B29K 101/12, B29L 9/00

(54) **ABDICHT-/VERBINDUNGSVERFAHREN VON UND ABDICHT-/VERBINDUNGSVORRICHTUNG FÜR STOSSKANTEN VON FUSSBODENBELAGSELEMENTEN AUS KUNSTSTOFFMATERIAL**
SEALING/CONNECTING METHOD OF AND SEALING/CONNECTING DEVICE FOR ABUTTING EDGES OF FLOOR COVERING ELEMENTS MADE FROM PLASTIC MATERIAL
PROCÉDÉ D'ÉTANCHÉIFICATION ET DE RACCORDEMENT AINSI QUE DISPOSITIF D'ÉTANCHÉIFICATION ET DE RACCORDEMENT POUR ARÊTES DE BORD D'ÉLÉMENTS DE REVÊTEMENT DE SOL EN MATIÈRE PLASTIQUE

(30) Priorität: 18.07.2017 EP 17181902
(43) Veröffentlichungstag der Anmeldung: 23.01.2019
(73) Patentinhaber: Leister Technologies AG, 6056 Kägiswil (CH)
(72) Erfinder: Odermatt, Lukas, 6362 Stansstad (CH); von Wyl, Bruno, 6056 Kägiswil (CH)
(74) Vertreter: Witte, Weller & Partner Patentanwälte mbB

(56) Entgegenhaltungen:
- WO-A2-2011/117504
- DE-A1- 10 359 909
- DE-A1-102008 029 007
- DE-B4- 10 048 000
- US-A- 4 913 772

## Beschreibung

Die Erfindung betrifft ein Abdicht-/Verbindungsverfahren von mindestens zwei aneinander angrenzenden flächigen Fußbodenbelagselementen aus Kunststoffmaterial miteinander längs ihren einander zugewandten, direkt benachbarten und sich zumindest teilweise berührenden seitlichen Rändern, die auf einem Boden in einem Raum eines Gebäudes liegend angeordnet werden.

Die Erfindung betrifft außerdem eine Abdicht-/Verbindungsvorrichtung zur Durchführung des Abdicht-Nerbindungsverfahrens.

Die Erfindung betrifft zudem ein- oder mehrschichtige, flächige Fußbodenbelagselemente zum Zusammensetzen zu einem Fußbodenbelag auf einem Boden eines Raums eines Gebäudes mittels des Abdicht-Nerbindungsverfahrens.

Flächige ein- oder mehrschichtige Fußbodenbelagselemente aus Kunststoffmaterial, die aneinander angrenzend auf dem Boden eines Raums eines Gebäudes liegend verlegt werden, sodass sich daraus ein geschlossener Fußbodenbelag ergibt, sind allgemein bekannt. Aufgrund ihrer Strapazierfähigkeit und dekorativem Muster sind sie als Bodenbelag etwa in Wohnräumen, Arbeitsräumen wie auch Geschäftsräumen außerordentlich beliebt, da der Belag wasserdicht, wasserfest und leicht zu reinigen ist. Zudem tragen derartige Fußbodenbelagselemente maßgeblich zu einer individuellen ästhetische Gestaltung des Raums bei. Solche Fußbodenbelagselemente sind daher in eine kaum überschaubaren Anzahl an Varianten hinsichtlich ihrer Größe und Form, ihrer farblichen Gestaltung und Struktur, etwa mit Imitation von Holzfußbodenbelägen oder Steinfußbodenbelägen, auf dem Markt erhältlich.

Die einzelnen Fußbodenbelagselemente sind flächig ausgebildet. Dies bedeutet, dass die Grundform der Fußbodenbelagselemente im Vergleich zu ihren lateralen Abmessungen nur eine geringe Höhe aufweist. Die flächigen Fußbodenbelagselemente können etwa in einer Form von Fliesen, Planken, Dielen, Brettern oder auch bahnförmig ausgestaltet sein, wobei diese Aufzählung nicht abschließend ist. Die Oberfläche der Fußbodenbelagselemente ist, abgesehen von einer gegebenenfalls vorhandenen dreidimensionalen Oberflächenstruktur, eben. Eine solche dreidimensionale Oberflächenstruktur ist dann wiederum im Vergleich zu der Materialstärke respektive Dicke eines Fußbodenbelagselements gering ausgeprägt. Die Oberfläche eines Fußbodenbelagselements befindet sich bei Anordnung des Fußbodenbelagselements auf einem Boden eines Raums eines Gebäudes zur Ausbildung eines Fußbodenbelags aus den Fußbodenbelagselementen an der Oberseite des Fußbodenbelagselements, die dem Boden abgewandt und typischerweise parallel zu dem Boden ausgerichtet ist. Die Unterseite ist ebenfalls eben und liegt bei Anordnung der Fußbodenbelagselemente auf einem Boden eines Raums eines Gebäudes zur Ausbildung eines Fußbodenbelags aus den Fußbodenbelagselementen auf diesem Boden auf und ist im verlegten Zustand eines Fußbodenbelagselements im Gegensatz zu der Oberfläche bzw. der Oberseite nicht sichtbar. Die Oberseite und die Unterseite bilden zusammen mit den Seitenflächen, in dieser Schrift als seitliche Ränder bezeichnet, die gesamte Oberfläche respektive die gesamte Berandung des Volumens eines Fußbodenbelagselements. Die Gesamtoberfläche eines Fußbodens oder kurz die Fußbodenoberfläche eines aus den Fußbodenbelagselementen zusammengesetzten Fußbodens ergibt sich aus der Kombination der Oberflächen der einzelnen, zu der Ausbildung des Fußbodens entsprechend angeordneten und miteinander verbundenen Fußbodenbelagselementen.

Fliesenförmig ausgestaltete Fußbodenbelagselemente können dabei quadratisch mit einer Kantenlänge im Bereich von 0,5 m bis 0,6 m sein. Die Fußbodenbelagselemente könne aber auch eine rechteckige Fliesenform mit Kantenlängen von 0,5 m × 0,9 m oder von 0,3 m × 0,6 m aufweisen. Die derzeit am häufigsten verwendete Fliesenform ist quadratisch mit einer Kantenlänge von 0,61 m. Plankenförmige Fußbodenbelagselemente sind typischerweise länglich rechteckig, d. h., eine der lateralen Seiten ist deutlich länger als die andere Seite. Die typische Größe solcher Fußbodenbelagselemente liegt im Bereich von 0,2 m × 0,9 m. Die Dicke der fliesenförmigen wie auch der plankenförmigen Fußbodenbelagselemente beträgt zumeist etwa 2 mm, teilweise bis zu 3 mm. Allerdings sind auch mit um die 10 mm deutlich dickere fliesen- oder plankenförmige Fußbodenbelagselemente erhältlich. Die Dicke gebräuchlicher bahnförmiger Fußbodenbelagselemente beträgt um die 2 mm bei einer Breite von um die 2 m und Längen von 20 m bis 30 m. Jedoch sind auch bahnförmige Fußbodenbelagselemente mit Breiten von um die 4 m erhältlich. Derartige flächige Fußbodenbelagselemente werden zumeist im Wesentlichen aus Polyvinylchlorid (PVC) hergestellt, seltener im Wesentlichen aus Polyethylen (PE). Bei der Ausbildung eines Fußbodens aus Fußbodenbelagselementen können identische wie auch nicht identische Fußbodenbelagselemente miteinander kombiniert werden. Es können daher fliesenförmige Fußbodenbelagselemente unterschiedlicher Größe und Form ebenso miteinander kombiniert werden wie fliesenförmige Fußbodenbelagselemente mit plankenartigen Fußbodenbelagselementen. Insbesondere die fliesenartigen Fußbodenbelagselemente müssen auch nicht zwingend rechteckig bzw. quadratisch ausgestaltet sein, sie können etwa auch in Form von Vielecken ausgestaltet sein, wobei zur Ausbildung eines Fußbodenbelags verschiedene Vielecke miteinander kombiniert werden können. Die Fußbodenbelagselemente können etwa auch L-förmig, T-förmig, parallelogrammförmig oder trapezförmig ausgebildet sein. Alle Fußbodenbelagselemente zur Ausbildung eines Fußbodenbelags können die gleiche Farbe, das Gleiche Dekor und/oder die gleiche Oberflächenstruktur aufweisen. Es können aber auch Fußbodenbelagselemente mit unterschiedlicher Farbe, Dekor und/oder Oberflächenstruktur beliebig miteinander kombiniert werden. Auf diese Weise lässt sich eine nahezu unendliche Vielfalt von unterschiedlich ausgestalteten Fußbodenbelägen eines Raums eines Gebäudes ausbilden.

Da aus fabrikationstechnischen und aus verlegungstechnischen Gründen die Breite und/oder die Länge der Fußbodenbelagselemente in der Regel kleiner ist als die zu belegenden Böden, treten beim Verlegen regelmäßig zwischen den direkt benachbarten und sich zumindest teilweise berührenden seitlichen Rändern direkt benachbarter Fußbodenbelagselemente Fugen auf, an denen der Bodenbelag nicht wasserdicht ist bzw. bei mechanischer Beanspruchung verletzt werden kann. Bei solchen aneinander angrenzend verlegten Fußbodenbelagselementen aus Kunststoffmaterial kann auch bei anfänglich sehr geringen Ausmaßen der Fugen im Laufe der Zeit Schmutz und Putzwasser in die Naht eindringen. Um dies zu verhindern, ist es aus dem Stand der Technik bekannt und üblich, die Fugen derartiger Fußbodenbelagselemente nach dem Verlegen abzudichten, d. h., die seitlichen Ränder von flächigen, aneinander angrenzend verlegten Fußbodenbelagselementen aus Kunststoffmaterial miteinander in einem Verbindungsbereich in einer Umgebung längs ihrer direkt benachbarten und sich zumindest teilweise berührenden seitlichen Ränder abdichtend zu verbinden. Dabei kommt typischerweise ein Kalt- oder ein Warmschweißverfahren zur Anwendung. Wesentlich ist dabei, dass die resultierende Gesamtoberfläche des aus einzelnen Fußbodenbelagselementen zusammengesetzten Fußbodenbelags einen harmonischen, ungestörten Eindruck hinterlässt, als wäre der gesamte Fußbodenbelag bildlich gesprochen "aus einem Guss" und eben nicht aus einzelnen Elementen zusammengesetzt. Die Tatsache, dass der Fußboden aus einzelnen Fußbodenbelagselementen zusammengefügt ist, sollte daher nach Abschluss der Ausbildung des vollständigen Fußbodenbelags auf einem Boden eines Raums eines Gebäudes aus den einzelnen Fußbodenbelagselementen möglichst nicht sichtbar sein.

Abdicht-/Verbindungsverfahren und Abdicht-/Verbindungsvorrichtungen zum abdichtenden Verbinden von Stoßkanten von bahn- oder plattenförmigen Fußbodenbelagselementen aus Kunststoffmaterial miteinander längs ihrer direkt benachbarten, einander zugewandten und sich zumindest teilweise berührenden seitlichen Ränder mittels Warmverschweißung sind aus dem Stand der Technik in unterschiedlichsten Ausführungsformen bekannt. Beispielhaft wird auf die Druckschriften DE 195 32 598 A1 und DE 100 48 000 B4 verwiesen.

Aus der DE 195 32 598 A1 ist ein Verfahren bekannt, bei dem vorzugsweise einschichtige bahnförmige Bodenbelagselemente verwendet werden, deren seitliche Ränder an der die Nutzseite bildenden Oberseite so vorgeformt sind, dass sie einen Aufnahmekanal für einen thermoplastischen Kunststoffdraht bilden. Allerdings ermöglicht es dieses Verfahren nicht, die Bodenbelagselemente so zu verschweißen, dass die Nähte nicht sichtbar sind. Der Aufnahmekanal wird mit dem plastifizierten Kunststoffdraht aufgefüllt und damit stoffschlüssig mit den Bodenbelagselementen verbunden.

Die Schrift DE 100 48 000 B4 offenbart eine Vorrichtung und ein Verfahren zum Verschweißen und/oder Abdichten von einschichtigen Bodenbelägen. Diese ermöglichen, die Bodenbelagselemente so zu verschweißen, dass die Nähte nicht sichtbar sind. Dabei erfolgt das Verschweißen der Bodenbelagselemente von der Unterseite her, sodass das Obermaterial fugenlos verlegt werden kann. Dazu werden oder sind die seitlichen Ränder derart vorgeformt, dass zwischen den seitlichen Rändern zweier Bodenbelagselemente ein Aufnahmekanal für eine Schweißschnur gebildet wird, der sich auf der der Nutzseite abgewandten Unterseite der Elemente befindet. Die Schweißschnur wird durch einen Laser im Durchstrahlschweißverfahren erwärmt und damit stoffschlüssig mit den Fußbodenbelagselementen verbunden.

Ausgehend von dem vorstehend beschriebenen Stand der Technik liegt der Erfindung die Aufgabe zugrunde, eine Möglichkeit vorzuschlagen, insbesondere mehrschichtig aufgebaute auf einem Boden eines Raums eines Gebäudes zur Ausbildung eines Fußbodens aus diesen Fußbodenbelagselementen angeordnete Fußbodenbelagselemente entlang ihrer einander zugewandten, direkt benachbarten und sich zumindest teilweise berührenden seitlichen Ränder abdichtend stoffschlüssig derart miteinander zu verbinden, dass die Verbindungsnähte unsichtbar sind, wobei die Fußbodenbelagselemente unterhalb der an der Fußbodenoberfläche befindlichen Oberfläche respektive Sichtseite effizient und verlässlich verschweißt werden sollen.

Diese Aufgabe wird erfindungsgemäß durch ein Abdicht-/Verbindungsverfahren mit den Merkmalen des unabhängigen Patentanspruchs 1, durch eine Abdicht-/Verbindungsvorrichtung mit den Merkmalen des nebengeordneten Patentanspruchs 8 sowie durch ein mehrschichtiges Fußbodenbelagselement mit den Merkmalen des nebengeordneten Patentanspruchs 9 gelöst. Weitere vorteilhafte Ausführungsformen sind den jeweils abhängigen Patentansprüchen zu entnehmen.

Bei dem erfindungsgemäßen Abdicht-/Verbindungsverfahren von mindestens zwei aneinander angrenzenden flächigen Fußbodenbelagselementen aus Kunststoffmaterial miteinander längs ihrer einander zugewandten und sich zumindest teilweise berührenden seitlichen Rändern, wobei die Fußbodenbelagselemente auf einem Boden eines Raums eines Gebäudes liegend angeordnet werden, werden als Fußbodenbelagselemente einschichtige oder mehrschichtige Fußbodenbelagselemente verwendet, die sich in einem Bereich ihrer seitlichen Ränder derart überlappen, dass ein Fußbodenbelagselement ein anderes Fußbodenbelagselement an dessen Oberfläche lediglich mit einem Teil seiner gesamten Materialstärke überdeckt, wobei die Temperatur von zumindest einem der aneinander angrenzenden Fußbodenbelagselemente entlang seiner seitlichen, an die seitlichen Ränder eines weiteren Fußbodenbelagselements angrenzenden Ränder in einer Umgebung seiner Ränder durch Energieeintrag temporär lokal gegenüber der Raumtemperatur so weit erhöht wird, dass wenigstens eine Schicht der Fußbodenbelagselemente örtlich in einem Verbindungsbereich entlang ihrer direkt benachbarten und sich zumindest teilweise berührenden seitlichen Rändern in einer Umgebung der Ränder mindestens teilweise plastifiziert wird, wobei das eine Fußbodenbelagselement mit dem anderen Fußbodenbelagselement stoffschlüssig verbunden wird und wobei die gemeinsame Oberfläche der Fußbodenbelagselemente nach Abschluss des Abdicht- und/oder Verbindungsverfahrens insbesondere im Verbindungsbereich keine Kanten, Stufen und/oder Sprünge aufweist.

Im Rahmen dieser Erfindung wird also vorgesehen, dass zwei benachbarte abzudichtende und/oder zu verbindende Fußbodenbelagselemente sich insbesondere in einem Verbindungsbereich in der Umgebung ihrer seitlichen, einander zugewandten und sich zumindest teilweise berührender Ränder nicht vollständig in der Art überlappen, dass ein Fußbodenbelagselement ein zweites, benachbartes Fußbodenbelagselement dieses an dessen Oberfläche mit seiner gesamten Materialstärke überdeckt, wodurch im Verbindungsbereich eine Kante, eine Stufe oder ein Sprung gebildet würde. Des Weiteren wird erfindungsgemäß vorgesehen, dass die Fußbodenbelagselemente bis auf durch Toleranzen und/oder durch eine entsprechend strukturierte Oberfläche bedingt außer in einem gewissen Bereich um seitlichen Ränder herum überall die gleiche Materialstärke respektive Dicke aufweisen. Zudem wird vorgesehen, dass alle zu einem Fußboden zusammengesetzten oder zusammensetzbaren Fußbodenbelagselemente bis auf durch Toleranzen und/oder durch eine entsprechend strukturierte Oberfläche bedingt außer in einer gewissen Umgebung um die seitlichen Ränder herum alle die gleiche Materialstärke respektive Dicke aufweisen.

Die resultierende Gesamtoberfläche nach dem Abdichten und/oder Verbinden der beiden Fußbodenbelagselemente soll möglichst ungestört sein. Das bedeutet, dass bei einem aus derartigen Fußbodenbelagselementen gebildeten Fußboden nach Abschluss des Abdichtung- und/oder Verbindungsverfahren bestenfalls bei sehr genauer Sichtprüfung durch einen Fachkundigen erkennbar ist, dass der Fußboden aus mehreren derartigen Fußbodenbelagselementen zusammengefügt worden ist. Der aus dem Abdicht- und/oder Verbindungsprozess resultierende Fußbodenbelag darf insbesondere keine oberflächlichen Kanten, Stufen, Sprünge oder Ähnliches aufweisen, die etwa regelrecht als Stolperfallen wirken und zudem den ästhetischen Gesamteindruck des resultierenden Fußbodens herabsetzen würden. Eine teilweise Überlappung zweier benachbarter Fußbodenbelagselemente in einem Verbindungsbereich in der Umgebung der seitlichen, einander zugewandten und sich zumindest teilweise berührenden Ränder der beiden Fußbodenbelagselemente kann daher lediglich an oder unterhalb der nach dem Abdichten und/oder Verbinden der beiden Fußbodenbelagselemente resultierenden Gesamtoberfläche erfolgen. Eine mehrfache teilweise Überdeckung bzw. ein mehrfacher teilweiser

Überlapp ist dabei jedoch möglich. Ein zumindest teilweiser Überlapp oder eine zumindest teilweise Überdeckung eines Fußbodenbelagselements durch ein direkt benachbartes Fußbodenbelagselement mit dessen gesamter Materialstärke respektive Dicke, und sei es auch nur in einem Verbindungsbereich der benachbarten Fußbodenbelagselemente, ist daher notwendigerweise ausgeschlossen.

Der Energieeintrag kann dabei auf unterschiedlichste Weise erfolgen, beispielsweise durch Wärmeleitung oder Wärmeübertragung mittels elektromagnetischer Strahlung, insbesondere elektromagnetische Strahlung aus dem nahen Infrarotbereich des elektromagnetischen Spektrums, wie sie von einem Halogenstrahler oder entsprechenden Laserstrahlungsquellen emittiert wird. Der Energieeintrag führt zu einer Temperaturerhöhung in dem Material in mindestens einer Schicht der Fußbodenbelagselemente. Die Energie kann dabei in direkter oder indirekter Weise in eine, mehrere oder alle Schichten der Fußbodenbelagselemente eingetragen werden und dort eine unterschiedlich starke Erwärmung bewirken. Dies hängt im Wesentlichen von den physikalischen Eigenschaften (etwa Reflexion, Transmission, Absorption) der Trägerschicht, der Dekorschicht und der Verschleißdeckschicht ab. Sofern in diesen Schichten aufgrund geringer Absorption nur eine geringe Energieaufnahme erfolgen kann, d. h., nicht wenigstens eine dieser Schichten eines Fußbodenbelagselements längs seiner seitlichen Ränder nicht in direkter Weise insbesondere durch Wärmeeinwirkung in einem Verbindungsbereich entlang seiner seitlichen Ränder in einer Umgebung der seitlichen Ränder zumindest partiell effizient aufgeschmolzen werden kann, ist eine indirekte Abdichtung/Verbindung möglich, indem der Energieeintrag über ein zusätzliches bahn- oder plattenförmiges Zwischenstück aus Kunststoffmaterial erfolgt, das in einem Verbindungsbereich direkt benachbarter Fußbodenbelagselemente optional anordenbar ist. Das Material dieses Zwischenstücks wird vorzugsweise so gewählt, dass dort ein effizienter und hoher Energieeintrag möglich ist, sodass dieses insbesondere durch Wärmeeinwirkung zumindest partiell aufgeschmolzen werden kann und die Fußbodenbelagselemente nahe ihren einander zugewandten, direkt benachbarten und sich zumindest teilweise berührenden seitlichen Rändern somit indirekt örtlich angeschmolzen werden können, um in einem Verbindungsbereich eine stoffschlüssige Verbindung zwischen den Schichten zweier benachbarter Fußbodenbelagselemente und/oder dem Zwischenstück und den beiden aneinander angrenzenden Fußbodenbelagselementen zu ermöglichen.

Bei einer Ausführungsform des erfindungsgemäßen Abdicht-/Verbindungsverfahrens werden als Fußbodenbelagselemente vorzugsweise mehrschichtige Fußbodenbelagselemente mit mindestens einer, eine Dekorschicht tragenden, Trägerschicht sowie einer die Dekorschicht schützenden obersten Verschleißdeckschicht verwendet, wobei die Temperatur von zumindest einem der aneinander angrenzenden Fußbodenbelagselemente entlang seiner seitlichen, an die seitlichen Ränder eines weiteren Fußbodenbelagselements angrenzenden Ränder, in einer Umgebung seiner Ränder durch Energieeintrag temporär lokal gegenüber der Raumtemperatur so weit erhöht wird, dass wenigstens eine Schicht der Fußbodenbelagselemente örtlich in einem Verbindungsbereich entlang ihrer direkt benachbarten und sich zumindest teilweise berührenden seitlichen Ränder in einer Umgebung der seitlichen Ränder mindestens teilweise plastifiziert wird, wobei das eine Fußbodenbelagselement mit dem anderen Fußbodenbelagselement unmittelbar oder mittelbar stoffschlüssig verbunden wird.

Bei der wenigstens einen erwärmten Schicht kann es sich auch um eine weitere, in dem mehrschichtigen Fußbodenbelagselement befindlichen, Schicht handeln. Die Verschleißdeckschicht ist in der Regel zumindest im sichtbaren Bereich des elektromagnetischen Spektrums, d. h., für Licht, transparent, damit die Dekorschicht sichtbar ist. Für die vorliegende Erfindung muss sie auch zumindest für elektromagnetische Strahlung aus dem infraroten Spektralbereich transparent sein, sofern im Rahmen eines erfindungsgemäßen Abdicht-/Verbindungsverfahrens mit einer entsprechenden elektromagnetischen Strahlung gearbeitet wird. Grundsätzlich ist es möglich, die Schichten bezüglich der Transparenz für gewisse Teile des elektromagnetischen Spektrums so auszugestalten, dass je nach Anwendungsverfahren die richtigen Schichten transparent bzw. absorbierend sind. Das Verfahren erlaubt auch die Verwendung von absorbierenden Überbrückungsprofilen in einem Verbindungsbereich direkt benachbarter Fußbodenbelagselemente, sodass dann keine sich durch die gesamte laterale Ausdehnung eines Fußbodenbelagselements erstreckende Schicht in den zu verbindenden Fußbodenbelagselementen absorbierend ausgestaltet sein muss.

Bei einer anderen Ausführungsform des erfindungsgemäßen Abdicht-/Verbindungsverfahrens werden als Fußbodenbelagselemente vorzugsweise einschichtige Fußbodenbelagselemente verwendet. Dabei wird die Temperatur von zumindest einem der aneinander angrenzenden Fußbodenbelagselemente in einer Umgebung entlang seiner seitlichen, an die seitlichen Ränder eines weiteren Fußbodenbelagselements angrenzenden Ränder durch Energieeintrag direkt oder indirekt temporär lokal gegenüber der Raumtemperatur so weit erhöht, dass die eine Schicht der Fußbodenbelagselemente entlang ihrer direkt benachbarten und sich zumindest teilweise berührenden seitlichen Ränder in einer Umgebung der seitlichen Ränder mindestens teilweise plastifiziert wird, wobei das eine Fußbodenbelagselement mit dem anderen Fußbodenbelagselement unmittelbar stoffschlüssig verbunden wird.

Bei einer bevorzugten Ausführungsform der Erfindung werden Fußbodenbelagselemente verwendet, von denen mindestens eines von zwei aneinander angrenzenden Fußbodenbelagselementen entlang seiner seitlichen, an die seitlichen Ränder eines anderen Fußbodenbelagselements angrenzenden Ränder mindestens in einem Verbindungsbereich in einer Umgebung seiner Ränder zumindest eine obere, im infraroten Spektralbereich transparente, Schicht als Verschleißdeckschicht und mindestens eine untere, im infraroten Spektralbereich absorbierende, Schicht als Trägerschicht aufweist und dass die seitlichen, direkt benachbarten und sich zumindest teilweise berührenden Ränder der Fußbodenbelagselemente im Verbindungsbereich entlang der seitlichen Ränder in einer Umgebung der Ränder derart geformt oder nachgeformt werden, dass beim Zusammensetzen der Fußbodenbelagselemente zu einem Fußbodenbelag die transparente Schicht des einen Fußbodenbelagselements der absorbierenden Schicht des anderen Fußbodenbelagselements direkt überdeckend angeordnet und mit dieser stoffschlüssig verbunden wird.

Zum einen können gleich ausgebildete Fußbodenbelagselemente genutzt werden, die an einer Stirnseite und an einer Längsseite derart ausgebildet sind, dass sie dort randseitig einen über die untere absorbierende Schicht vorstehenden oberen transparenten Schichtbereich besitzen, und deren andere Stirnseite und Längsseite dazu komplementär ausgebildet ist, d. h., an diesen Stellen randseitig eine gegenüber der oberen transparenten Schicht vorstehenden unteren absorbierenden Schichtbereich aufweisen. Damit können identisch ausgebildete Fußbodenbelagselemente in Längs- als auch in Querrichtung mit seitlicher Überlappung an den Stirn- bzw. Längsseiten aneinander gereiht und dichtend miteinander verbunden, insbesondere verschweißt werden. Dabei wird ein Verbindungsbereich derart gestaltet, dass keine Kanten, Stufen, Sprünge, Unebenheiten oder dergleichen einem fertigen, aus erfindungsgemäßen Fußbodenbelagselementen ausgebildeten Fußbodenbelag vorhanden sind. An dieser Stelle sei erneut betont, dass eine Überlappung von abzudichtenden und/oder zu verbindenden Fußbodenelementen bei der Ausbildung eines Fußbodenbelags aus diesen Fußbodenbelagselementen in einem Verbindungsbereich direkt benachbarter Fußbodenbelagselemente nur mit einem Teil der gesamten Materialstärke eines Fußbodenbelagselements erfolgen darf. Bei gegenseitigem mehrfachen Überlapp bzw. mehrfacher gegenseitiger Überdeckung (etwa bei gegenseitigem Überlapp mehrerer übereinanderliegender Schichten direkt benachbarter Fußbodenbelagselemente in einem Verbindungsbereich) darf die Gesamtmaterialstärke respektive die gesamte Dicke beim gegenseitigen Überlapp der Fußbodenbelagselemente die gesamte Materialstärke bzw. Dicke der einzelnen Fußbodenbelagselemente außerhalb eines Verbindungsbereiches weder überschreiten noch unterschreiten, damit der aus der Verbindung der Fußbodenbelagselemente resultierende Fußbodenbelag im Verbindungsbereich der Fußbodenbelagselemente nach Abschluss des Abdichtungs-/Verbindungsverfahren keinerlei Kanten, Stufen, Sprünge, Unebenheiten oder dergleichen aufweist. Gleiches gilt auch für den Fall, das ein Überlapp zwischen direkt benachbarten Fußbodenbelagselementen mittels zusätzlichem, in einen Verbindungsbereich eingebrachten, Material hergestellt wird.

Zum anderen können zwei ungleichartig zueinander komplementär ausgebildete Fußbodenbelagselemente genutzt und miteinander in abwechselnder Reihenfolge kombiniert werden. Der eine Typ der Fußbodenbelagselemente ist derart ausgebildet, dass diese im Bereich ihrer seitlichen Ränder an beiden Stirnseiten und an beiden Längsseiten eine über die untere absorbierende Schicht vorstehenden oberen transparenten Schichtbereich besitzen. Der andere Typ der Fußbodenbelagselemente ist an den beiden Stirnseiten und an den beiden Längsseiten dazu komplementär ausgebildet ist, d. h., diese weisen an diesen Stellen an ihren seitlichen Rändern eine gegenüber der oberen transparenten Schicht vorstehenden unteren absorbierenden Schichtbereich auf. Damit können die beiden verschiedenen, aber komplementären Typen der Fußbodenbelagselemente in Längs- als auch in Querrichtung in abwechselnder Folge mit seitlicher Überlappung an den Stirn- bzw. Längsseiten aneinander gereiht und dichtend miteinander verbunden, insbesondere verschweißt werden. Auch hierbei wird der Verbindungsbereich insbesondere derart gestaltet, dass keine Kanten, Stufen, Sprünge oder sonstige Arten von Unebenheiten bei einem fertigen, aus erfindungsgemäßen Fußbodenbelagselementen ausgebildeten, Fußbodenbelag vorhanden sind.

Es können auch Fußbodenbelagselemente abgedichtet und/oder verbunden werden, die ein einem Verbindungsbereich entlang ihrer seitlichen Ränder in einer Umgebung der seitlichen Ränder derart geformt oder nachgeformt werden, dass ein Profilaufnahmeraum für ein zusätzliches, plastifizierbares Überbrückungsprofil aus Kunststoffmaterial in mindestens einer Schicht der Fußbodenbelagselemente gebildet wird, wobei die mindestens eine Schicht von benachbarten Fußbodenbelagselementen über das Überbrückungsprofil stoffschlüssig miteinander verbunden wird. Vorzugsweise werden mehrere der Schichten benachbarter Fußbodenbelagselemente über das Überbrückungsprofil stoffschlüssig miteinander verbunden. Dabei wird der Profilaufnahmeraum in seiner Form vorteilhafterweise an die Außenkontur des Überbrückungsprofil angepasst ausgebildet. Das Überbrückungsprofil kann vorkonfektioniert sein, d. h., in seiner Länge der Breite der Stirnseiten bzw. der Längsseiten eines Fußbodenbelagselements entsprechen und so direkt in den Profilaufnahmeraum eingesetzt werden. Alternativ dazu kann das Überbrückungsprofil unkonfektioniert als Rollen- oder Streifenware bereitgestellt und erst bei oder kurz vor der Ausbildung des Fußbodenbelages aus den entsprechenden Fußbodenbelagselementen passend abgelängt werden.

Ein Profilaufnahmeraum in den Fußbodenbelagselementen und dort einzubringende Überbrückungsprofile können sowohl bei an den im Bereich ihrer seitlichen, direkt benachbarten und einander zugewandten Ränder nicht überlappend aneinander angrenzenden Fußbodenbelagselementen wie auch bei den im Bereich ihrer seitlichen, direkt benachbarten und einander zugewandten Ränder überlappend aneinander angrenzenden Fußbodenbelagselementen vorgesehen werden. Ein Profilaufnahmeraum und Überbrückungsprofile können auch vorgesehen werden, wenn identisch ausgeführte Fußbodenbelagselemente oder zwei Typen von unterschiedlich ausgeführten Fußbodenbelagselementen miteinander dichtend verschweißt werden, die bei einem Fußbodenbelagselement in einem Verbindungsbereich entlang seiner seitlichen Ränder in einer Umgebung der seitlichen Ränder einen über die untere absorbierende Schicht vorstehenden oberen transparenten Schichtbereich besitzen und bei dem angrenzenden Fußbodenbelagselement in einem Verbindungsbereich entlang seiner seitlichen Ränder in einer Umgebung der seitlichen Ränder eine gegenüber der oberen transparenten Schicht vorstehenden unteren absorbierenden Schichtbereich aufweisen, sodass eine seitliche Überlappung benachbarter Fußbodenbelagselemente sichergestellt wird. Bei den im Bereich ihrer direkt benachbarten und einander zugewandten seitlichen Ränder nicht überlappend aneinander angrenzenden Fußbodenbelagselementen kann der Profilaufnahmeraum an den stirnseitigen seitlichen Rändern und/oder den längsseitigen seitlichen Rändern problemlos eingearbeitet werden, um auch derartige aneinander angrenzende Fußbodenbelagselemente längs ihrer einander zugewandten seitlichen Ränder sicher dauerhaft abzudichten und miteinander zu verbinden.

Generell kann ein erfindungsgemäßes Abdicht-/Verbindungsverfahren natürlich auch bei zweischichtigen Fußbodenbelagselementen angewandt werden, bei der die Trägerschicht nur eine Nutzschicht trägt und die Dekorschicht sowie die Verschleißdeckschicht zu einer Oberschicht zusammengeführt sind, bei welcher farbgebende und/oder strukturgebende Materialpartikel in einer Kunststoffmatrix eingebettet sind.

Bei einer Ausführungsform eines erfindungsgemäßen Abdicht-/Verbindungsverfahrens werden die die Ränder der Fußbodenbelagselemente in einem Verbindungsbereich entlang ihrer einander zugewandten, direkt benachbarten seitlichen Ränder in einer Umgebung der seitlichen Ränder mit einer Fase oder einer Stufe versehen, um so eine Überlappung der auf dem Boden verlegten Fußbodenbelagselemente zu erreichen, die eine stoffschlüssige Verbindung und damit Abdichtung der Fußbodenbelagselemente entlang ihrer einander zugewandten, sich zumindest teilweise berührenden, seitlichen Ränder mittels eines Durchstrahlverfahrens zu ermöglichen. Bei einer anderen Ausführungsform des vorstehend beschriebenen Abdicht-/Verbindungsverfahrens werden die seitlichen Ränder der Fußbodenbelagselemente in einem Verbindungsbereich entlang ihrer seitlichen Ränder in einer Umgebung der seitlichen Ränder mit einer Nut versehen. Die Fasen, Stufen oder Nuten können bereits bei der industriellen Fertigung der Fußbodenbelagselemente realisiert oder auch erst später vor dem Verlegen der Fußbodenbelagselemente in diese eingebracht werden.

Werden die Fußbodenbelagselemente bei der Verlegung mit einer Fase versehen, dann kann ein Schneidwerkzeug zur Ausbildung einer Fase in einem Verbindungsbereich entlang der seitlichen Ränder in einer Umgebung der seitlichen Ränder eines Fußbodenbelagselements verwendet werden. Ein derartiges Schneidwerkzeug umfasst zumindest einen länglichen, quaderförmigen und an einer Seite keilförmig abgeschrägten Grundkörper, wobei eine Teilfläche einer ersten länglichen Seitenfläche und eine weitere zweite längliche Seitenfläche des Grundkörpers an einer gemeinsamen schmalen Kante des Grundkörpers unter einem spitzen Winkel zusammenlaufen, wobei die erste und die zweite längliche Seitenfläche direkt gegenüberliegende Seitenflächen des Grundkörpers sind und die Teilfläche eine Keilfläche ist, wobei im Bereich der Keilfläche eine mindestens Klinge flach auf der Keilfläche liegend angeordnet oder anordenbar an dem Grundkörper fixiert oder fixierbar ist, die in einer Umgebung der Kante, an der die Keilfläche und die zweite längliche Seitenfläche zusammenlaufen über den Grundkörper hinaus übersteht und deren Hauptlängsachse parallel zu den beiden seitlichen Kanten der Keilfläche verläuft, an denen die Keilfläche an jeweils eine weitere längliche Seitenfläche des Grundkörpers grenzt. Die Klinge des Schneidwerkzeugs kann dabei etwa als eine Trapezklinge ausgebildet sein, wie sie von Teppich- oder Cuttermessern bekannt ist. Daher können für das Schneidwerkzeug herkömmliche, im Handel erhältliche, Klingen verwendet werden. Der spitze Winkel, unter dem die Keilfläche und die zweite längliche Seitenfläche zusammenlaufen, beträgt vorzugsweise 20°. Es sind jedoch auch andere Ausgestaltungen eines Schneidwerkzeugs, bei denen der spitze Winkel größer oder kleiner als 20° ist, möglich. Eine Klinge ist vorzugsweise derart an dem Schneidwerkzug fixierbar oder fixiert, sodass diese leicht auswechselbar ist, etwa mittels einer einfach lösbaren Klemmvorrichtung. So können abgenutzte Klingen zeiteffizient auch während des Verlegens von entsprechend anzufasenden Fußbodenbelagselementen ersetzt werden. Das Schneidwerkzeug kann auch Bestandteil einer Vorrichtung zum Verlegen und/oder Abdichten respektive Verbinden erfindungsgemäßer Fußbodenbeläge sein, sodass Anfasen, Verlegen sowie Abdichten respektive Verbinden von Fußbodenbelagselementen in einem Arbeitsgang ausführbar ist. Alternativ kann ein Schneidwerkzeug Teil einer Produktionsanlage für erfindungsgemäße Fußbodenbelagselemente sein, so dass die Fußbodenbelagselemente bereits im Zuge der Produktion mit einer entsprechenden Fase versehen werden.

Bei einer Variante des erfindungsgemäßen Abdicht-/Verbindungsverfahrens werden die Fußbodenbelagselemente in einem Verbindungsbereich entlang ihrer seitlichen Ränder in einer Umgebung der seitlichen Ränder mit einer im infraroten Spektralbereich transparenten oder absorbierenden Beschichtung versehen. Damit kann der Verbindungsbereich exakt definiert werden. Dabei wird festgelegt, an welchen Stellen der Fußbodenbelagselemente beispielsweise elektromagnetische Strahlung einwirken kann und in welchen Bereichen damit die Abdichtung und Verbindung der Fußbodenbelagselemente stattfinden soll. Außerdem können dadurch auch Standard-Fußbodenbelagselemente aus Kunststoffmaterial verarbeitet werden, d. h., abdichtend miteinander verbunden werden.

Bei einer begünstigten Variante des vorgeschlagenen Abdicht-/Verbindungsverfahrens werden bei der Herstellung der Fußbodenbelagselemente in einem Verbindungbereich entlang ihrer seitlichen Ränder in einer Umgebung der seitlichen Ränder zumindest an einer Längsseite und/oder zumindest an einer Kopfseite der Fußbodenbelagselemente Steckverbindungsmittel ausgebildet, welche beim Zusammensetzen der Fußbodenbelagselemente zu einem Fußbodenbelag miteinander gleitend in Eingriff gebracht werden, um eine mechanische Verbindung bereitzustellen, die die abdichtende Verbindung vor unerwünschter Krafteinwirkung schützt, die die Schweißverbindung beschädigen könnte.

Bei einer anderen vorteilhaften Variante des vorgeschlagenen Abdicht-/Verbindungsverfahrens werden bei der Herstellung der Fußbodenbelagselemente in einem Verbindungsbereich entlang ihrer seitlichen Ränder in einer Umgebung der seitlichen Ränder zumindest an einer Längsseite und/oder zumindest an einer Kopfseite der Fußbodenbelagselemente Klickverbindungsmittel ausgebildet, welche beim Zusammensetzen der Fußbodenbelagselemente zu einem Fußbodenbelag rastend miteinander in Eingriff gebracht werden. Auch damit wird eine mechanische Verbindung bereitgestellt, die die abdichtende Verbindung vor unerwünschter Krafteinwirkung schützt, um einer Beschädigung der Schweißverbindung vorzubeugen.

Zur Durchführung des vorstehend beschriebenen Abdicht-Nerbindungsverfahrens wird vorzugsweise eine dazu entsprechend ausgebildete Abdicht-/Verbindungsvorrichtung verwendet. Eine derartige Abdicht-/Verbindungsvorrichtung weist ein Fahrgestell zum Bewegen auf einem Fußbodenbelag, Mittel zum Energieeintrag mittels elektromagnetischer Strahlung aus dem nahen Infrarotbereich in einen Verbindungsbereich entlang der seitlichen Ränder in einer Umgebung der seitlichen Ränder der Fußbodenbelagselemente, einen Antrieb zum selbständigen Bewegen der Vorrichtung auf dem Fußbodenbelag, Steuerungsmittel zur Steuerung der Bewegung der Vorrichtung auf dem Fußbodenbelag und mindestens einen Sensor zum direkten oder indirekten Erfassen der Position des Fahrgestells auf dem Fußbodenbelag, einen Sensor zum Erfassen der Temperatur zumindest in einem Verbindungsbereich und/oder Regelungsmittel zur Einstellung/Regelung der Temperatur zumindest in einem Verbindungsbereich auf. Dabei ist erfindungsgemäß vorgesehen, dass das oder die die Mittel zum Energieeintrag einer erfindungsgemäßen Abdicht-/Verbindungsvorrichtung als Halogenstrahler ausgebildet sind.

Ein erfindungsgemäßes einschichtiges oder mehrschichtiges, flächiges und thermoplastisches Kunststoffmaterial aufweisendes Fußbodenbelagselement, das zum Zusammensetzen zu einem Fußbodenbelag auf einem Boden eines Raums eines Gebäudes vorgesehen ist, ist zur Durchführung des vorstehend beschriebenen Abdicht-/Verbindungsverfahrens ausgebildet. Dabei überlappen sich zwei aneinander angrenzende Fußbodenbelagselemente in einem Bereich ihrer seitlichen Ränder derart, dass eines der Fußbodenbelagselemente das jeweils andere Fußbodenbelagselement an dessen Oberfläche lediglich mit einem Teil seiner gesamten Materialstärke respektive Dicke überdeckt. Bei teilweiser Überlappung oder Überdeckung, die auch gegenseitig und mehrfach sein kann, darf die resultierende gesamte Materialstärke im Bereich der Überlappung und Überdeckung weder geringer noch größer als die gesamte Materialstärke bzw. Dicke der Fußbodenbelagselemente außerhalb eines Verbindungsbereichs entlang ihrer seitlichen Ränder in einer Umgebung ihrer seitlichen Ränder sein.

Vorzugsweise ist das Fußbodenbelagselement auf einem Boden liegend anordenbar. Bei einer bevorzugten Ausführungsform ist das Fußbodenbelagselement mehrschichtig ausgebildet und umfasst mindestens eine, eine Dekorschicht tragende, Trägerschicht sowie eine die Dekorschicht schützende oberste Verschleißdeckschicht und weist zumindest in einem Verbindungsbereich entlang seiner seitlichen Ränder in einer Umgebung seiner seitlichen Ränder mindestens eine obere im infraroten Spektralbereich transparente Schicht und mindestens eine untere, im infraroten Spektralbereich absorbierende Schicht auf, wobei wenigstens eine der Schichten des Fußbodenbelagselements örtlich in einem Verbindungsbereich direkt und/oder indirekt durch Energieeintrag plastifizierbar ist, und wobei zumindest in einem Verbindungsbereich entlang der seitlichen Ränder in einer Umgebung der seitlichen Ränder die seitlichen Ränder des Fußbodenbelagselements derart geformt oder nachgeformt sind, dass beim Zusammensetzen der Fußbodenbelagselemente zu einem Fußbodenbelag die transparente Schicht eines Fußbodenbelagselements der absorbierenden Schicht des benachbarten Fußbodenbelagselements direkt überdeckend anordenbar und mit dieser stoffschlüssig verbindbar ist. In mindestens einer der Schichten der Fußbodenbelagselemente kann zudem ein Profilaufnahmeraum für ein zusätzliches Überbrückungsprofil gebildet sein, das mit einer oder mehreren der absorbierenden Schichten und/oder der transparenten Schicht stoffschlüssig verbindbar ist.

Bei einer anderen bevorzugten Ausführungsform ist das Fußbodenbelagselement einschichtig ausgebildet, wobei die eine Schicht des Fußbodenbelagselements örtlich in einem Verbindungsbereich entlang seiner seitlichen Ränder in einer Umgebung der seitlichen Ränder direkt und/oder indirekt durch Energieeintrag mindestens teilweise plastifizierbar ist und wobei die seitlichen Ränder des Fußbodenbelagselements im Verbindungsbereich derart geformt oder nachgeformt sind, dass beim Zusammensetzen der Fußbodenbelagselemente zu einem Fußbodenbelag die Schicht eines Fußbodenbelagselements der Schicht eines benachbarten Fußbodenbelagselements direkt überdeckend anordenbar und mit dieser stoffschlüssig verbindbar ist. Es kann zudem in der einen Schicht der Fußbodenbelagselemente ein Profilaufnahmeraum für ein zusätzliches Überbrückungsprofil gebildet sein, das mit der Schicht stoffschlüssig verbindbar ist.

Aus der Erfindung resultieren die folgenden Vorteile:
- Nahtloses Schweißen von thermoplastischen Bodenbelägen (Bahnen und insbesondere auch Platten), ohne Fugenvorbereitung und Schweißdraht
- Einfache Verlegung und Vorbereitung der thermoplastischen Bodenbeläge
- Dichte Verschweißung thermoplastischer Bodenbeläge
- Einfache und effiziente Verschweißung der thermoplastischen Bodenbeläge mithilfe von IR-Strahlung im Überlappschweißen
- Gewährleistung der Formstabilität der thermoplastischen Bodenbeläge mit Hilfe eines Steck- oder Klick-Systems verbunden oder durch Verkleben auf den Estrich fixiert
- Vorbereitung der Schweißkanten industriell vom Hersteller der Bodenbeläge
- Erweiterter Einsatzbereich von Design-Bodenbelägen, da diese nahtlos sowie nicht sichtbar verschweißt ausgebildet werden können
- Positive Hygiene-Effekte, da gründliche Nassreinigung möglich
- Verbessertes Verschmutzungsverhalten des Bodenbelags
- Saubere Verarbeitung des Bodenbelages beim Verlegen und Abdichten

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar. Sämtliche aus den Ansprüchen, der Beschreibung oder der Zeichnung hervorgehenden Merkmale und/oder Vorteile, einschließlich konstruktive Einzelheiten, räumliche Anordnung und Verfahrensschritte können sowohl für sich als auch in den verschiedensten Kombinationen erfindungswesentlich sein. In den Figuren werden gleiche oder ähnliche Bauteile mit gleichen oder ähnlichen Bezugszeichen gekennzeichnet. Es zeigen in schematischer Querschnittdarstellung:
- Figur 1: einen Fußbodenbelag aus einschichtigen Fußbodenbelagselementen, die ohne Bildung einer Stufe nebeneinander angeordnet sind, sodass der Fußbodenbelag eben ist, wobei der Verbindungsbereich an den Stoßkanten mit einer Faser versehen ist;
- Figur 2: einen ebenen Fußbodenbelag aus dreischichtigen Fußbodenbelagselementen, wobei der Verbindungsbereich an den Stoßkanten eine interne Fase aufweist;
- Figur 3: einen ebenen Fußbodenbelag aus dreischichtigen Fußbodenbelagselementen, wobei der Verbindungsbereich an den Stoßkanten eine interne Stufe aufweist;
- Figur 4: den Bodenbelag aus der Figur 4, wobei im Verbindungsbereich zusätzlich Steck- oder Klickverbindungsmittel vorgesehen sind;
- Figur 5: einen ebenen Fußbodenbelag aus einschichtigen Fußbodenbelagselementen, wobei der Verbindungsbereich an den Stoßkanten unten einen Profilaufnahmeraum für ein zusätzliches absorbierendes Überbrückungsprofil aufweist;
- Figur 6: den Bodenbelag aus der Figur 5, wobei im Verbindungsbereich zusätzlich Steck- oder Klickverbindungsmittel vorgesehen sind;
- Figur 7: einen ebenen Fußbodenbelag aus einschichtigen Fußbodenbelagselementen, wobei der Verbindungsbereich an den Stoßkanten oben einen Profilaufnahmeraum für ein zusätzliches transparentes Überbrückungsprofil aufweist;
- Figur 8: den Bodenbelag aus der Figur 7, wobei im Verbindungsbereich zusätzlich Steck- oder Klickverbindungsmittel vorgesehen sind;
- Figur 9: einen ebenen Fußbodenbelag aus einschichtigen Fußbodenbelagselementen, wobei der Verbindungsbereich an den Stoßkanten eine interne Fase und dort eine absorbierende Beschichtung aufweist;
- Figur 10: eine erfindungsgemäße Abdicht-/Verbindungsvorrichtung zum Abdichten/Verbinden von Stoßkanten von bahn- oder plattenförmigen aneinander angrenzenden einschichtigen oder mehrschichtigen Fußbodenbelagselementen aus Kunststoffmaterial; und
- Figur 11: ein Schneidwerkzeug in einer isometrischen Ansicht.

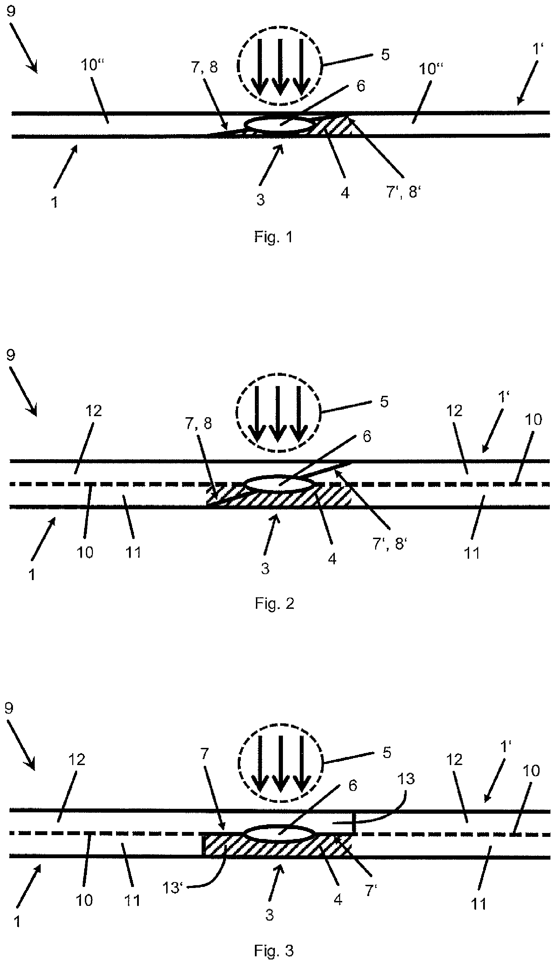

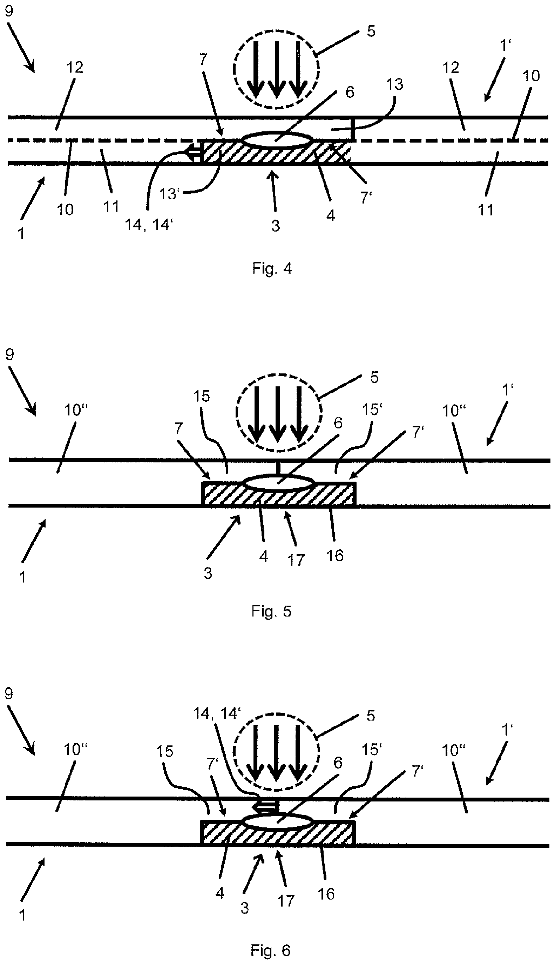

Die Zeichnungen veranschaulichen in der Figur 1 sowie in den Figuren 5 bis 9 jeweils einen Fußbodenbelag 9, der aus einschichtigen Fußbodenbelagselementen 1, 1' zusammengesetzt ist, und in den Figuren 2 bis 4 jeweils einen Fußbodenbelag 9, der aus mehrschichtigen Fußbodenbelagselementen 1, 1' zusammengefügt ist, dessen Fußbodenbelagselemente 1, 1' nach dem erfindungsgemäßen Abdicht-/Verbindungsverfahren abgedichtet miteinander verbunden, insbesondere verschweißt sind.

Die Darstellungen in den Figuren 5 bis 8 zeigen zum besseren Verständnis der Erfindung Ausgestaltungen, die selbst jedoch nicht zur Erfindung gehören.

Die Figur 1 zeigt zwei einschichtige Fußbodenbelagselemente 1, 1', die als einzige Schicht nur eine Träger-/Dekorschicht 10" aufweisen und ohne Bildung einer externen Stufe nebeneinander seitlich an der Stirnseite oder Längsseite überlappend angeordnet sind. Die Fußbodenbelagselemente 1, 1', sind ebenfalls aus unterschiedlichen Material hergestellt. Das Fußbodenbelagselement 1 ist für elektromagnetische Strahlung aus dem infraroten Spektralbereich transparent, das Fußbodenbelagselement 1' ist zumindest in dem Verbindungsbereich 3 für infrarote Strahlung absorbierend. Das Fußbodenbelagselemente 1' ist im Verbindungsbereich 3 schraffiert abgebildet. Die Schraffur 4 soll die Absorptionsfähigkeit des Verbindungsbereichs 3 verdeutlichen. Der Verbindungsbereich 3 wird von einem symbolisch angedeuteten Strahl 5 mit elektromagnetischer Strahlung aus dem infraroten Spektralbereich bestrahlt. Dadurch kann in einem Durchstrahlverfahren eine Schweißnaht 6 entlang den vertikal geneigten seitlichen Rändern 7, 7' erzeugt werden, die die beiden Fußbodenbelagselemente 1, 1' stoffschlüssig und damit dichtend verbindet. Die beiden Fußbodenbelagselemente 1, 1` sind im Verbindungsbereich 3 mit Fasen 8, 8' versehen, wobei die Fase 8 des Fußbodenbelagselements 1 komplementär und spiegelbildlich zur Fase 8' des Fußbodenbelagselements 1' ausgebildet und angeordnet ist. Damit sind die einander zugewandten, direkt benachbarten und sich zumindest teilweise berührenden seitlichen Ränder 7, 7' der beiden Fußbodenbelagselemente 1, 1' keilförmig ausgebildet, wobei die Fasen 8, 8' derart übereinander angeordnet werden können, dass sich ein ebener Fußbodenbelag 9 ergibt.

Die Figur 2 stellt zwei dreischichtige Fußbodenbelagselemente 1, 1` dar, die zur Bildung eines ebenen Fußbodenbelages 9 nebeneinander seitlich an einem stirnseitigen seitlichen Rand 7, 7' oder einem längsseitigen seitlichen Rand 7, 7' überlappend angeordnet sind. Die Fußbodenbelagselemente 1, 1' besitzen einen identischen Schichtaufbau, wobei die Schichten jeweils unterschiedliches Material aufweisen. Jedes der Fußbodenbelagselemente 1, 1' weist eine Dekorschicht 10 tragende Trägerschicht 11 sowie einer die Dekorschicht 10 schützende obersten Verschleißdeckschicht 12 auf. Dabei ist zumindest die Verschleißdeckschicht 12 für Strahlung aus dem infraroten Spektralbereich transparent und die Trägerschicht 11 für infrarote Strahlung absorbierend. Das Fußbodenbelagselement 1' ist im Verbindungsbereich 3 schraffiert abgebildet. Die Schraffur 4 soll auch hier die Absorptionsfähigkeit der Verbindungsbereichs 3 verdeutlichen. Der Verbindungsbereich 3 wird von einem symbolisch angedeuteten Strahl 5 mit elektromagnetischer Strahlung aus dem infraroten Spektralbereich bestrahlt. Dadurch kann in einem Durchstrahlverfahren eine Schweißnaht 6 entlang den einander zugewandten, direkt benachbarten und sich zumindest teilweise berührenden seitlichen Rändern 7, 7' erzeugt werden, die gegenüber der Horizontalen geneigt sind, und die beiden Fußbodenbelagselemente 1, 1' stoffschlüssig und damit dichtend verbindet. Die beiden Fußbodenbelagselemente 1, 1' sind im Verbindungsbereich 3 mit Fasen 8, 8' versehen, wobei die Fase 8 des Fußbodenbelagselements 1 komplementär und spiegelbildlich zur Fase 8' des Fußbodenbelagselements 1' ausgebildet und angeordnet ist. Damit sind die einander zugewandten seitlichen Ränder 7, 7' der beiden Fußbodenbelagselemente 1, 1' keilförmig ausgebildet, wobei die Fasen 8, 8' derart übereinander angeordnet werden können, dass sich ein ebener Fußbodenbelag 9 ergibt. Dabei übergreift der vorstehende für die (infrarote) elektromagnetische Strahlung transparent Teil des Fußbodenbelagselements 1 den überstehenden für die elektromagnetische Strahlung absorbierenden Teil des Fußbodenbelagselements 1' schräg.

Die Figur 3 zeigt zwei dreischichtige Fußbodenbelagselemente 1, 1', die zur Bildung eines ebenen Fußbodenbelages 9 nebeneinander seitlich an einem stirnseitigen seitlichen Rand 7, 7' oder einem längsseitigen seitlichen Rand überlappend angeordnet sind. Deren Schichtaufbau ist identisch und wie vorstehend bezüglich der Figur 2 beschrieben ausgebildet. Das Fußbodenbelagselement 1' ist im Verbindungsbereich 3 schraffiert abgebildet, wobei die Schraffur 4 auch hier das Absorptionsvermögen des Verbindungsbereichs 3 verdeutlichen soll. Der Verbindungsbereich 3 wird von einem symbolisch angedeuteten Strahl 5 mit elektromagnetischer Strahlung aus dem infraroten Spektralbereich bestrahlt, sodass in einem Durchstrahlverfahren eine Schweißnaht 6 entlang den einander zugewandten, direkt benachbarten und sich zumindest teilweise berührenden seitlichen Rändern 7, 7' erzeugt wird, die die beiden Fußbodenbelagselemente 1, 1` stoffschlüssig und damit dichtend verbindet. Die beiden Fußbodenbelagselemente 1, 1' sind im Verbindungsbereich 3 mit Stufen 13, 13' versehen, wobei die Stufe 13 des Fußbodenbelagselements 1 komplementär und spiegelbildlich zur Stufe 13' des Fußbodenbelagselements 1' ausgebildet und angeordnet ist. Damit sind die einander zugewandten seitlichen Ränder 7, 7' der beiden Fußbodenbelagselemente 1, 1' stufenförmig ausgebildet, wobei die Stufen 13, 13' derart übereinander angeordnet werden können, dass sich ein ebener Fußbodenbelag 9 ergibt. Dabei übergreift der vorstehende für die (infrarote) elektromagnetische Strahlung transparente Teil des Fußbodenbelagselements 1 den überstehenden für die elektromagnetische Strahlung absorbierenden Teil des Fußbodenbelagselements 1'.

Die Figur 4 stellt die zwei dreischichtigen Fußbodenbelagselemente 1, 1' aus Figur 3 erneut dar, wobei an dem Fußbodenbelagselement 1 und an dem Fußbodenbelagselement 1' im Verbindungsbereich 3 jeweils Steckverbindungsmittel und/oder Klickverbindungsmittel 14, 14' angeordnet sind, die korrespondierend ausgebildet sind und zusammen wirken.

Die Figur 5 veranschaulicht wie die Figur 1 zwei einschichtige Fußbodenbelagselemente 1, 1', die eine einzige Träger-/Dekorschicht 10" aufweisen und zur Ausbildung eines ebenen Fußbodenbelages 9 in einem Verbindungsbereich 3 mit stirnseitigen seitlichen Rändern oder längsseitigen seitlichen Rändern aneinander angrenzend angeordnet sind. Die Fußbodenbelagselemente 1, 1' besitzen einen identischen einschichtigen Schichtaufbau, und weisen insbesondere Material auf, das für Strahlung transparent ist. Die beiden Fußbodenbelagselemente 1, 1' sind im Verbindungsbereich 3 mit Stufen 15, 15' versehen, wobei die Stufe 15 des Fußbodenbelagselements 1 identisch und spiegelbildlich zur Stufe 15' des Fußbodenbelagselements 1' ausgebildet und angeordnet ist. Damit sind die einander zugewandten, direkt benachbarten und sich zumindest teilweise berührenden seitlichen Ränder 7, 7' der beiden Fußbodenbelagselemente 1, 1' stufenförmig ausgebildet, wobei die Stufen 15, 15' derart nebeneinander auf einer Unterseite der Fußbodenbelagselemente 1, 1' angeordnet sind, dass ein vertiefter Profilaufnahmeraum 16 für ein vorgesehenes plastifizierbares Überbrückungsprofil 17 realisiert ist, und dass sich ein ebener Fußbodenbelag 9 ergibt. In dem in der Figur 5 gezeigten Ausführungsbeispiel ist das in dem Profilaufnahmeraum 16 aufgenommene Überbrückungsprofil 17 aus thermoplastischem Kunststoffmaterial gefertigt, das für eine gewisse elektromagnetische Strahlung absorbierend ist. Der Verbindungsbereich 3 wird von einem symbolisch angedeuteten Strahl 5 mit elektromagnetischer Strahlung aus dem infraroten Spektralbereich bestrahlt,sodasss in einem Durchstrahlverfahren eine Schweißnaht 6 entlang den horizontalen Abschnitten der einander zugewandten seitlichen Ränder 7, 7' der Stufen 15, 15' und dem Überbrückungsprofil 17 erzeugt wird, die die beiden Fußbodenbelagselemente 1, 1' über das Überbrückungsprofil 17 dichtend miteinander verbindet. Das Überbrückungsprofil 17 ist im Verbindungsbereich 3 schraffiert abgebildet, wobei die Schraffur 4 die Absorptionsfähigkeit des Verbindungsbereichs 3 verdeutlichen soll.

Die Figur 6 zeigt erneut die zwei einschichtigen Fußbodenbelagselemente 1, 1' aus Figur 5, wobei an dem Fußbodenbelagselement 1 und an dem Fußbodenbelagselement 1' im Verbindungsbereich 3 jeweils Steckverbindungsmittel und/oder Klickverbindungsmittel 14, 14' angeordnet sind, die korrespondierend ausgebildet sind und zusammen wirken.

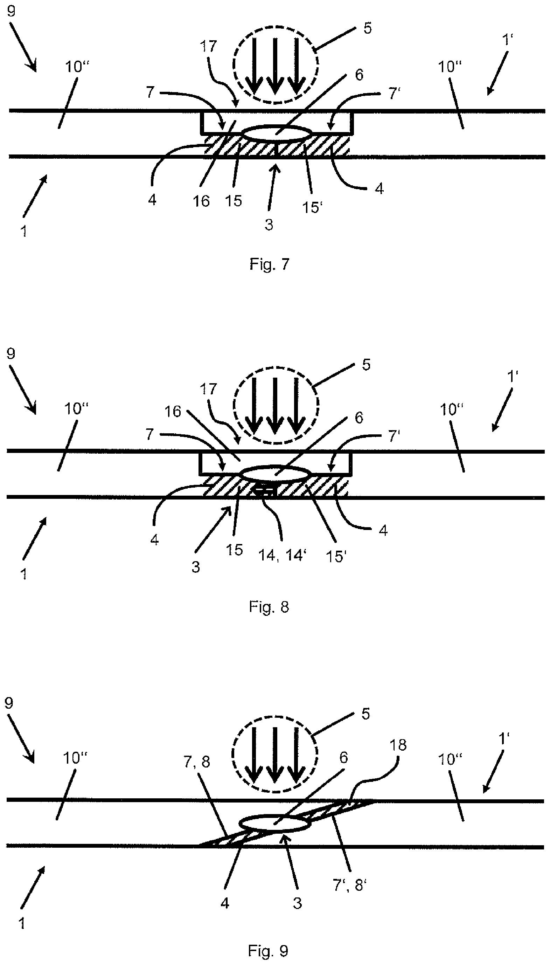

Die Figur 7 veranschaulicht wie die Figur 5 zwei einschichtige Fußbodenbelagselemente 1, 1', die zur Ausbildung eines ebenen Fußbodenbelages 9 an stirnseitigen seitlichen Rändern oder an längsseitigen seitlichen Rändern aneinander angrenzend angeordnet sind. Die Fußbodenbelagselemente 1, 1' besitzen einen identischen einschichtigen Schichtaufbau mit einer einzigen Träger-/Dekorschicht 10" und bestehen insbesondere aus einem Material, das für gewisse elektromagnetische Strahlung absorbierend ist. Die beiden Fußbodenbelagselemente 1, 1' sind im Verbindungsbereich 3 mit Stufen 15, 15' versehen, wobei die Stufe 15 des Fußbodenbelagselements 1 identisch und spiegelbildlich zur Stufe 15' des Fußbodenbelagselements 1' ausgebildet und angeordnet ist. Damit sind die einander zugewandten, direkt benachbarten und sich zumindest teilweise berührenden seitlichen Ränder 7, 7' der beiden Fußbodenbelagselemente 1, 1' stufenförmig ausgebildet, wobei die Stufen 15, 15' derart nebeneinander auf einer Oberseite der Fußbodenbelagselemente 1, 1' angeordnet sind, dass an der Oberseite ein vertiefter Profilaufnahmeraum 16 für ein vorgesehenes plastifizierbares Überbrückungsprofil 17 realisiert ist, und dass sich ein ebener Fußbodenbelag 9 ergibt. In dem in der Figur 7 gezeigten Ausführungsbeispiel ist das in dem Profilaufnahmeraum 16 aufgenommene Überbrückungsprofil 17 aus thermoplastischem Kunststoffmaterial gefertigt, das für gewisse elektromagnetische Strahlung transparent und damit nicht absorbierend ist. Der Verbindungsbereich 3 wird von einem symbolisch angedeuteten Strahl 5 mit elektromagnetischer Strahlung aus dem infraroten Spektralbereich bestrahlt, sodass in einem Durchstrahlverfahren eine Schweißnaht 6 entlang der horizontalen Abschnitte der einander zugewandten seitlichen Ränder 7, 7', der Stufen 15, 15' und dem Überbrückungsprofil 17 erzeugt wird, die die beiden Fußbodenbelagselemente 1, 1' über das Überbrückungsprofil 17 dichtend miteinander verbindet. Das Überbrückungsprofil 17 ist im Verbindungsbereich 3 schraffiert abgebildet, wobei die Schraffur 4 das Absorptionsvermögen des Verbindungsbereichs verdeutlichen soll.

Die Figur 8 zeigt erneut die zwei einschichtigen Fußbodenbelagselemente 1, 1' aus Figur 7, wobei an dem Fußbodenbelagselement 1 und an dem Fußbodenbelagselement 1' im Verbindungsbereich 3 jeweils Steckverbindungsmittel und/oder Klickverbindungsmittel 14, 14' angeordnet sind, die korrespondierend ausgebildet sind und zusammen wirken.

Die Figur 9 stellt wie die Figur 1 zwei einschichtige Fußbodenbelagselemente 1, 1' dar, die ohne Bildung einer externen Stufe an stirnseitigen seitlichen Rändern oder längsseitigen seitlichen Rändern aneinander angrenzend und überlappend angeordnet sind. Die Fußbodenbelagselemente 1, 1', sind aus identischen Materialien hergestellt. Sie weisen eine einzige Träger-/Dekorschicht 10" auf, die für elektromagnetische Strahlung aus dem infraroten Spektralbereich transparent ist. Die beiden Fußbodenbelagselemente 1, 1' sind im Verbindungsbereich 3 mit Fasen 8, 8' versehen, wobei die Fase 8 des Fußbodenbelagselements 1 komplementär und spiegelbildlich zur Fase 8' des Fußbodenbelagselements 1' ausgebildet und angeordnet ist. Damit sind die einander zugewandten, direkt benachbarten und sich zumindest teilweise berührenden seitlichen Ränder 7, 7' der beiden Fußbodenbelagselemente 1, 1' keilförmig ausgebildet, wobei die Fasen 8, 8' derart übereinander angeordnet sind, dass sich ein ebener Fußbodenbelag 9 ergibt. Die seitlichen Ränder 7, 7' sind im Verbindungsbereich 3 mit einer für elektromagnetische Strahlung aus dem infraroten Spektralbereich absorbierenden Beschichtung 18 versehen, die im Verbindungsbereich 3 zur Betonung ihrer Absorptionsfähigkeit schraffiert dargestellt ist. Der Verbindungsbereich 3 wird von einem symbolisch angedeuteten Strahl 5 mit infraroter elektromagnetischer Strahlung bestrahlt. Dadurch kann in einem Durchstrahlverfahren eine Schweißnaht 6 entlang den schräg verlaufenden, einander zugewandten seitlichen Rändern 7, 7' erzeugt werden, die die beiden Fußbodenbelagselemente 1, 1' stoffschlüssig und damit dichtend verbindet.

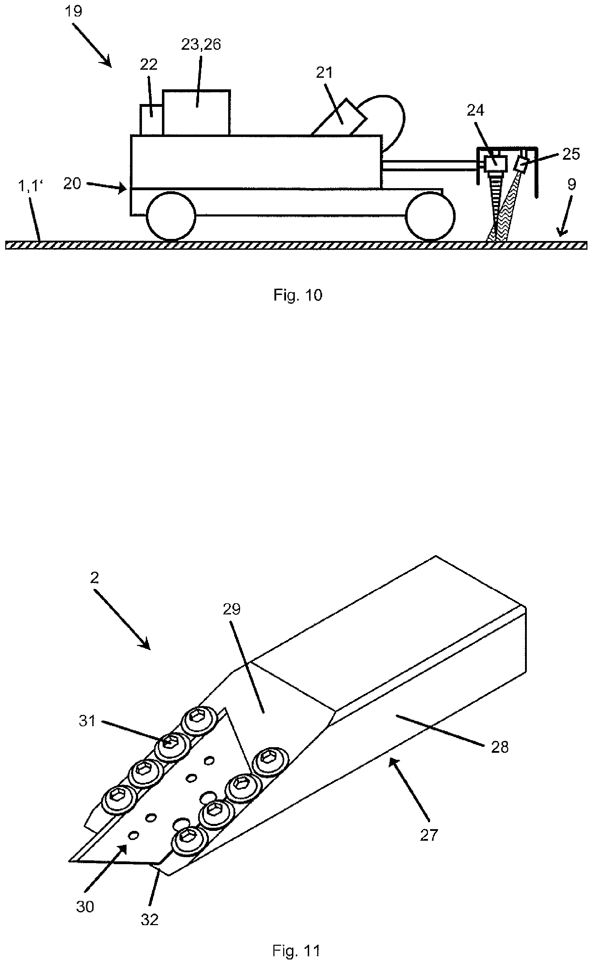

Die Figur 10 zeigt eine erfindungsgemäße Abdicht-/Verbindungsvorrichtung 19 zum Abdichten/Verbinden von einander zugewandten, direkt benachbarten und sich zumindest teilweise berührenden seitlichen Ränder 7, 7' von mindestens zwei bahn- oder plattenförmigen aneinander angrenzenden einschichtigen oder mehrschichtigen Fußbodenbelagselementen 1, 1' aus Kunststoffmaterial. Die Abdicht-/Verbindungsvorrichtung 19 weist ein Fahrgestell 20 zum Bewegen auf einem Fußbodenbelag 9, Mittel 21 zum Energieeintrag in einen Verbindungsbereich 3 entlang der seitlichen Ränder 7, 7' in einer Umgebung der Ränder 7, 7' der Fußbodenbelagselemente 1, 1', einen Antrieb 22 zum selbständigen Bewegen der Vorrichtung 19 auf dem Fußbodenbelag 9, Steuerungsmittel 23 zur Steuerung der Bewegung der Vorrichtung 19 auf dem Bodenbelag 9 und mindestens einen Sensor 24 zum direkten oder indirekten Erfassen der Position des Fahrgestells 20 auf dem Fußbodenbelag 9, einen Sensor 25 zum Erfassen der Temperatur der Fußbodenbelagselemente 1, 1' zumindest in einem Verbindungsbereich 3 und/oder Regelungsmittel 26 zur Einstellung/Regelung der Temperatur zumindest in einem Verbindungsbereich 3.

In Figur 11 ist exemplarisch ein Schneidwerkzeug 2 einer isometrischen Ansicht dargestellt. Das Schneidwerkzeug 2 umfasst einen quaderförmigen Grundkörper 27 mit vier länglichen, rechteckförmigen Seitenflächen und zwei quadratischen Stirnflächen. Der Grundkörper 27 ist in dem gezeigten Ausführungsbeispiel aus Metall hergestellt. Der quaderförmige Grundkörper 27 wird derart modifiziert, dass zwei gegenüberliegende längliche Seitenflächen - eine dieser Seitenflächen ist in Figur 11 mit der Referenznummer 28 markiert - derart zu einer der quadratischen Stirnflächen des quaderförmigen Grundkörpers 27 hin dreieckförmig abgeschrägt werden, dass diese Stirnfläche zu einer schmalen Kante 32 reduziert wird. An dieser Kante 32 laufen die unmodifizierte längliche Seitenfläche an der Unterseite und ein Teil der länglichen, modifizierten Seitenfläche an der Oberseite des Grundkörpers unter einem spitzen Winkel zusammen. In dem hier gezeigten Ausführungsbeispiel beträgt dieser Winkel 20°. Der an der Kante 32 mit der länglichen Seitenfläche an der Unterseite des Grundkörpers 27 zusammenlaufende Teil der oberseitigen, länglichen, modifizierten Seitenfläche wird als Keilfläche 29 bezeichnet. An der Keilfläche 29 ist eine handelsübliche (etwa von Teppich- oder Cuttermessern bekannte) Trapezklinge 30 liegend angeordnet und wird beidseitig von je vier äquidistant voneinander entlang der beiden seitlichen Kanten der Keilfläche 29 platzierten Schrauben 31 klemmend lösbar fixiert. Der Grundkörper 27 ist dazu mit acht entsprechenden Gewindebohrungen zur Aufnahme der Schrauben 31 versehen. Die Trapezklinge 30 lässt sich daher leicht austauschen, sofern dies etwa in Folge von Abnutzung erforderlich ist. Die Trapezklinge 30 ist parallel zu den seitlichen Kanten der Keilfläche 29 angeordnet und steht im Bereich der Kante 32, an der die unterseitige längliche Seitenfläche und die Keilfläche 29 zusammenlaufen, ein Stück weit über den Grundkörper 27 hinaus, um einen freien Schnittbereich zu gewährleisten.

## Patentansprüche

1. Abdicht-Nerbindungsverfahren von mindestens zwei aneinander angrenzenden flächigen Fußbodenbelagselementen (1, 1') aus Kunststoffmaterial miteinander längs ihren einander zugewandten, direkt benachbarten und sich zumindest teilweise berührenden seitlichen Rändern (7, 7'), wobei die Fußbodenbelagselemente auf einem Boden in einem Raum eines Gebäudes liegend angeordnet werden, **dadurch gekennzeichnet, dass** als Fußbodenbelagselemente (1, 1') einschichtige oder mehrschichtige Fußbodenbelagselemente (1, 1') verwendet werden, die sich in einem Bereich ihrer seitlichen Ränder (7, 7') derart überlappen, dass ein Fußbodenbelagselement (1, 1') ein anderes Fußbodenbelagselement (1', 1) an dessen Oberfläche lediglich mit einem Teil seiner gesamten Materialstärke überdeckt, wobei die Temperatur von zumindest einem der aneinander angrenzenden Fußbodenbelagselemente (1) entlang seiner seitlichen, an die seitlichen Ränder (7') eines anderen Fußbodenbelagselements (1') angrenzenden Ränder (7) in einer Umgebung seiner Ränder (7) durch Energieeintrag temporär lokal gegenüber der Raumtemperatur soweit erhöht wird, dass wenigstens eine Schicht der Fußbodenbelagselemente (1, 1') örtlich in einem Verbindungsbereich (3) entlang ihrer direkt benachbarten und sich zumindest teilweise berührenden seitlichen Ränder (7, 7') in einer Umgebung der Ränder (7, 7') mindestens teilweise plastifiziert wird, wodurch das eine Fußbodenbelagselement (1) mit dem anderen Fußbodenbelagselement (1') stoffschlüssig verbunden wird, wobei zur lokalen Temperaturerhöhung elektromagnetische Strahlung aus dem infraroten Spektralbereich verwendet wird und wobei die gemeinsame Gesamtoberfläche der Fußbodenbelagselemente (1, 1') bei Abschluss des Abdicht-/Verbindungsverfahrens, insbesondere im Verbindungsbereich (3), keine Kanten, Stufen und/oder Sprünge aufweist.

2. Abdicht-Nerbindungsverfahren nach Anspruch 1, **dadurch gekennzeichnet, dass** als Fußbodenbelagselemente (1, 1') mehrschichtige Fußbodenbelagselemente (1, 1 `) mit mindestens einer eine Dekorschicht tragenden Trägerschicht (11) sowie einer die Dekorschicht (10) schützenden obersten Verschleißdeckschicht (12) verwendet werden, wobei die Temperatur von zumindest einem der aneinander angrenzenden Fußbodenbelagselemente (1) entlang seiner seitlichen, an die seitlichen Ränder (7') eines anderen Fußbodenbelagselements (1') angrenzenden Ränder (7) in einer Umgebung seiner Ränder (7) durch Energieeintrag temporär lokal gegenüber der Raumtemperatur soweit erhöht wird, dass wenigstens eine Schicht (10, 11, 12) der Fußbodenbelagselemente (1, 1') örtlich in einem Verbindungsbereich (3) entlang ihrer direkt benachbarten und sich zumindest teilweise berührenden seitlichen Ränder (7, 7') in einer Umgebung der seitlichen Ränder (7, 7') mindestens teilweise plastifiziert wird, wobei das eine Fußbodenbelagselement (1) mit dem anderen Fußbodenbelagselement (1') unmittelbar oder mittelbar stoffschlüssig verbunden wird.

3. Abdicht-/Verbindungsverfahren nach Anspruch 1, **dadurch gekennzeichnet, dass** als Fußbodenbelagselemente (1, 1') einschichtige Fußbodenbelagselemente (1, 1') verwendet werden, wobei die Temperatur von zumindest einem der aneinander angrenzenden Fußbodenbelagselemente (1) in einer Umgebung entlang seiner seitlichen, an die seitlichen Ränder (7') eines anderen Fußbodenbelagselementes (1') angrenzenden Ränder (7) durch Energieeintrag direkt oder indirekt temporär lokal gegenüber der Raumtemperatur soweit erhöht wird, dass die eine Schicht der Fußbodenbelagselemente (1, 1') entlang ihrer direkt benachbarten und sich zumindest teilweise berührenden seitlichen Ränder (7, 7') in einer Umgebung der seitlichen Ränder (7, 7') mindestens teilweise plastifiziert wird, wobei das eine Fußbodenbelagselement (1) mit dem anderen Fußbodenbelagselement (1') unmittelbar stoffschlüssig verbunden wird.

4. Abdicht-/Verbindungsverfahren nach Anspruch 2, **dadurch gekennzeichnet, dass** mindestens eines von zwei aneinander angrenzenden Fußbodenbelagselementen (1) entlang seiner seitlichen, an die seitlichen Ränder eines anderen Fußbodenbelagselements (1') angrenzenden Ränder (7) mindestens in einem Verbindungsbereich (3) in einer Umgebung seiner Ränder (7) zumindest eine obere, im infraroten Spektralbereich transparente, Schicht als Verschleißdeckschicht (12) und mindestens eine untere, im infraroten Spektralbereich absorbierende, Schicht als Trägerschicht (11) aufweist und dass die seitlichen, direkt benachbarten und sich zumindest teilweise berührenden Ränder (7, 7') der Fußbodenbelagselemente (1, 1 `) im Verbindungsbereich (3) entlang der seitlichen Ränder (7, 7') in einer Umgebung der Ränder (7, 7') derart geformt oder nachgeformt werden, dass beim Zusammensetzen der Fußbodenbelagselemente (1, 1') zu einem Fußbodenbelag (9) die transparente Schicht des einen Fußbodenbelagselements (1) der absorbierenden Schicht des anderen Fußbodenbelagselements (1') direkt überdeckend angeordnet und mit dieser stoffschlüssig verbunden wird.

5. Abdicht-/Verbindungsverfahren nach Anspruch 2 oder 3, **dadurch gekennzeichnet, dass** die direkt benachbarten und sich zumindest teilweise berührenden seitlichen Ränder (7, 7') der Fußbodenbelagselemente (1, 1') im Verbindungsbereich (3) entlang ihrer seitlichen Ränder (7, 7') in einer Umgebung der seitlichen Ränder (7, 7') mit einer Fase (8), einer Stufe (13, 15, 16) oder einer Nut versehen werden.

6. Abdicht-/Verbindungsverfahren nach einem der vorstehenden Ansprüche 2 bis 5, **dadurch gekennzeichnet, dass** die direkt benachbarten und sich zumindest teilweise berührenden seitlichen Ränder (7, 7') der Fußbodenbelagselemente (1, 1') im Verbindungsbereich (3) entlang ihrer seitlichen Ränder (7, 7') in einer Umgebung der seitlichen Ränder (7, 7') mit einer im infraroten Spektralbereich transparenten oder absorbierenden Beschichtung (18) versehen werden.

7. Abdicht-/Verbindungsverfahren nach einem der vorstehenden Ansprüche 1 bis 6, **dadurch gekennzeichnet, dass** bei der Herstellung der Fußbodenbelagselemente (1, 1') entlang der seitlichen Ränder (7, 7') zumindest an einer Längsseite und/oder zumindest an einer Kopfseite der Fußbodenbelagselemente (1, 1') Steckverbindungsmittel (14, 14') oder Klickverbindungsmittel (14, 14') ausgebildet werden, wobei beim Zusammensetzen der Fußbodenbelagselemente (1, 1') zu einem Fußbodenbelag (9) die Steckverbindungsmittel (14, 14') miteinander gleitend und die Klickverbindungsmittel (14, 14') rastend miteinander in Eingriff gebracht werden.

8. Abdicht-/Verbindungsvorrichtung zur Durchführung des Verfahrens nach einem der vorstehenden Ansprüche 1 bis 7, umfassend ein Fahrgestell (20) zum Bewegen auf einem Fußbodenbelag (9), Mittel (21) zum Energieeintrag mittels elektromagnetischer Strahlung aus dem nahem Infrarotbereich in einen Verbindungsbereich (3) entlang der seitlichen Ränder (7, 7') in einer Umgebung der seitlichen Ränder (7, 7') der Fußbodenbelagselemente (1, 1'), einen Antrieb (22) zum selbständigen Bewegen der Vorrichtung (19) auf dem Fußbodenbelag (9), Steuerungsmittel (23) zur Steuerung der Bewegung der Vorrichtung (19) auf dem Fußbodenbelag (9) und mindestens einen Sensor (24) zum direkten oder indirekten Erfassen der Position des Fahrgestells (20) auf dem Fußbodenbelag (9), einen Sensor (25) zum Erfassen der Temperatur der Fußbodenbelagselemente (1, 1') zumindest in einem Verbindungsbereich (3) und/oder Regelungsmittel (26) zur Einstellung/Regelung der Temperatur zumindest in einem Verbindungsbereich (3), **gekennzeichnet durch** eine Ausbildung der Mittel zum Energieeintrag (21) als Halogenstrahler.

9. Mehrschichtiges, flächiges und thermoplastisches Kunststoffmaterial aufweisendes Fußbodenbelagselement (1, 1') zum Zusammensetzen zu einem Fußbodenbelag (9) auf einem Boden eines Raums eines Gebäudes, **dadurch kennzeichnet, dass** zwei aneinander angrenzende Fußbodenbelagselemente (1, 1') sich in einem Bereich ihrer seitlichen Ränder (7, 7') derart überlappen, dass eines der Fußbodenbelagselemente (1, 1') das jeweils andere Fußbodenbelagselement (1, 1') an dessen Oberfläche lediglich mit einem Teil seiner gesamten Materialstärke überdeckt und dass das Fußbodenbelagselement (1, 1') zur Durchführung des Abdicht-/Verbindungsverfahrens nach einem der vorstehenden Ansprüche 1 bis 7 ausgebildet ist.

10. Mehrschichtiges Fußbodenbelagselement (1, 1') nach Anspruch 9, **gekennzeichnet durch** mindestens eine, eine Dekorschicht (10) tragende Trägerschicht (11) eine die Dekorschicht (11) schützende oberste Verschleißdeckschicht (12), mindestens in einem Verbindungsbereich (3) entlang seiner seitlichen Ränder (7, 7') in einer Umgebung der seitlichen Ränder (7, 7') mindestens eine obere im infraroten Spektralbereich transparente Schicht (10, 11, 12) und mindestens eine untere, im infraroten Spektralbereich absorbierende Schicht (10, 11, 12), wobei wenigstens eine der Schichten (10, 11, 12) des Fußbodenbelagselements (1, 1') örtlich in einem Verbindungsbereich (3) des Fußbodenbelagselements (1, 1') direkt und/oder indirekt durch Energieeintrag mindestens teilweise plastifizierbar ist, und wobei die seitlichen Ränder (7, 7') des Fußbodenbelagselementes (1, 1') zumindest im Verbindungsbereich (3) entlang der seitlichen Ränder (7, 7') derart geformt oder nachgeformt sind, dass beim Zusammensetzen der Fußbodenbelagselemente (1, 1') zu einem Fußbodenbelag (9) die transparente Schicht (10, 11, 12) eines Fußbodenbelagselementes (1, 1') der absorbierenden Schicht (10, 11, 12) eines benachbarten Fußbodenbelagselementes (1', 1) direkt überdeckend anordenbar und mit dieser stoffschlüssig verbindbar ist.

11. Einschichtiges, flächiges und thermoplastisches Kunststoffmaterial aufweisendes Fußbodenbelagselement (1, 1') zum Zusammensetzen zu einem Fußbodenbelag (9) auf einem Boden eines Raums eines Gebäudes, **dadurch gekennzeichnet, dass** zwei aneinander angrenzende Fußbodenbelagselemente (1, 1') sich in einem Bereich ihrer seitlichen Ränder (7, 7') derart überlappen, dass eines der Fußbodenbelagselemente (1, 1') das jeweils andere Fußbodenbelagselement (1, 1') an dessen Oberfläche lediglich mit einem Teil seiner gesamten Materialstärke überdeckt, die eine Schicht (10") des Fußbodenbelagselementes (1, 1') örtlich in einem Verbindungsbereich (3) entlang einer seitlichen Ränder (7, 7') in einer Umgebung seiner seitlichen Ränder (7, 7') direkt und/oder indirekt durch Energieeintrag mindestens teilweise plastifizierbar ist, wobei die seitlichen Ränder (7, 7') des Fußbodenbelagselementes (1, 1') im Verbindungsbereich (3) derart geformt oder nachgeformt sind, dass beim Zusammensetzen der Fußbodenbelagselemente (1, 1') zu einem Fußbodenbelag (9) die Schicht (10") eines Fußbodenbelagselementes (1, 1') der Schicht (10") eines benachbarten Fußbodenbelagselementes (1', 1) direkt überdeckend anordenbar und stoffschlüssig verbindbar ist und das Fußbodenbelagselement (1, 1') zur Durchführung des Abdicht-/Verbindungsverfahrens nach einem der vorstehenden Ansprüche 1 bis 7 ausgebildet ist.

## Claims

1. Sealing/joining method of at least two mutually adjacent areal flooring elements (1, 1') of plastic material with one another along their mutually facing, directly adjacent and at least partially contacting lateral edges (7, 7'), wherein the flooring elements are to be arranged lying on a floor in a room of a building, **characterized in that** as flooring elements (1, 1'), single-layer or multilayer flooring elements (1, 1') are used which overlap in an area of their lateral edges (7, 7') such that one flooring element (1, 1') covers another flooring element (1', 1) at its surface only with a part of its total material thickness, wherein the temperature of at least one of the mutually adjacent flooring elements (1) along its lateral edges (7, 7') adjacent the lateral edges (7') of another flooring element (1') in a vicinity of its edges (7) is temporarily locally increased relative to the room temperature by energy input such that at least one layer of the flooring elements (1, 1') is at least partially plasticized locally in a connecting region (3) along their directly adjacent and at least partially contacting lateral edges (7, 7') in a vicinity of the edges (7, 7'), whereby the one flooring element (1) is connected to the other flooring element (1') in a materially bonded manner, wherein electromagnetic radiation in the infrared spectral range is used for the local temperature increase and wherein the common surface of the flooring elements (1, 1') comprises no edges, steps and/or cracks upon completion of the sealing/connecting process, in particular in the connecting region (3).

2. Sealing/joining method according to claim 1, **characterized in that** multilayer flooring elements (1, 1') are used as flooring elements (1, 1') comprising at least one support layer (11) carrying a decorative layer and an uppermost wearing surface layer (12) protecting the decorative layer (10), wherein the temperature of at least one of the mutually adjacent flooring elements (1) along its lateral edges (7') adjacent the lateral edges (7') of another flooring element (1') in a vicinity of its edges (7) is temporarily locally increased relative to the room temperature by energy input to such an extent that at least one layer (10, 11, 12) of the flooring elements (1, 1') is at least partially plasticized locally in a connecting region (3) along their directly adjacent and at least partially contacting lateral edges (7, 7') in a vicinity of the lateral edges (7, 7'), wherein the one flooring element (1) is directly or indirectly connected to the other flooring element (1') materially bonded to each other.

3. Sealing/joining method according to claim 1, **characterized in that** single-layer flooring elements (1, 1') are used as flooring elements (1, 1'), wherein the temperature of at least one of the mutually adjacent flooring elements (1) in a vicinity along its lateral edges (7') adjacent to the lateral edges (7') of another flooring element (1') is locally increased relative to the room temperature by energy input directly or indirectly to such an extent that the one layer of the flooring elements (1, 1') is at least partially plasticized along its directly adjacent and at least partially contacting lateral edges (7, 7') in a vicinity of the lateral edges (7, 7'), wherein the one flooring element (1) is directly connected to the other flooring element (1') materially bonded to each other.

4. Sealing/jointing method according to claim 2, **characterized in that** at least one of two mutually adjacent flooring elements (1) has along its lateral edges (7) adjoining the lateral edges of another flooring element (1') at least in a connecting region (3) in a vicinity of its edges (7) at least one upper layer transparent in the infrared spectral range as a wear cover layer (12) and at least one lower layer absorbing in the infrared spectral range as a carrier layer (11), and **in that** the lateral, directly adjacent and at least partially contacting edges (7, 7') of the flooring elements (1, 1') in the connecting region (3) along the lateral edges (7, 7') in a vicinity of the edges (7, 7') are shaped or reshaped such that, when assembling the flooring elements (1, 1') to form a flooring (9), the transparent layer of one flooring element (1) is arranged to directly overlap the absorbing layer of the other flooring element (1') and to be connected therewith materially bonded to each other.

5. Sealing/joining method according to claim 2 or 3, **characterized in that** the directly adjacent and at least partially contacting lateral edges (7, 7') of the flooring elements (1, 1') in the connecting region (3) along their lateral edges (7, 7') in a vicinity of the lateral edges (7, 7') are provided with a chamfer (8), a step (13, 15, 16) or a groove.

6. Sealing/joining method according to any of the preceding claims 2 to 5, **characterized in that** the directly adjacent and at least partially contacting lateral edges (7, 7') of the flooring elements (1, 1') in the connecting region (3) along their lateral edges (7, 7') in a vicinity of the lateral edges (7, 7') are provided with a coating (18) which is transparent or absorbent in the infrared spectral range.

7. Sealing/joining method according to any of the preceding claims 1 to 6, **characterized in that** during the manufacturing of the flooring elements (1, 1') along the lateral edges (7, 7') at least on one longitudinal side and/or at least on one head side of the flooring elements (1, 1') plug-in connection means (14, 14') or click connection means (14, 14') are provided, wherein, when assembling the flooring elements (1, 1') to form a flooring (9), the plug-in connection means (14, 14') are brought into engagement with one another in a sliding manner and the click connection means (14, 14') are brought into engagement with one another in a latching manner.

8. Sealing/jointing device for performing the method according to any of the preceding claims 1 to 7, comprising a chassis (20) for moving on a flooring (9), means (21) for introducing energy by means of electromagnetic radiation in the near infrared range into a connecting region (3) along the lateral edges (7, 7') in a vicinity of the lateral edges (7, 7') of the flooring elements (1, 1'), a drive (22) for self-propelled moving the device (19) on the flooring (9), control means (23) for controlling the movement of the device (19) on the flooring (9), and at least one sensor (24) for directly or indirectly detecting the position of the chassis (20) on the flooring (9), a sensor (25) for detecting the temperature of the flooring elements (1, 1') at least in a connecting region (3), and/or control means (26) for setting/controlling the temperature at least in a connecting region (3), **characterized by** a configuration of the means for energy input (21) as halogen radiator.

9. Multi-layer, areal and thermoplastic flooring element (1, 1') for assembly to form a flooring (9) on a floor of a room of a building, **characterized in that** two adjacent flooring elements (1, 1') overlap in a region of their lateral edges (7, 7') such that that one of the flooring elements (1, 1') covers the respective other flooring element (1, 1') at its surface only with a part of its total material thickness, and that the flooring element (1, 1') is adapted for performing the sealing/joining method according to any of the preceding claims 1 to 7.

10. Multilayer flooring element (1, 1') according to claim 9, **characterized by** at least one support layer (11) carrying a decorative layer (10), an uppermost wearing surface layer (12) protecting the decorative layer (11), at least in a connecting region (3) along its lateral edges (7, 7') in a vicinity of the lateral edges (7, 7') at least one upper layer (10, 11, 12) transparent in the infrared spectral range and at least one lower layer (10, 11, 12) absorbing in the infrared spectral range, wherein at least one of the layers (10, 11, 12) of the flooring element (1, 1') is locally in a connecting region (3) of the flooring element (1, 1') at least partially plasticizable directly and/or indirectly by energy input, and wherein the lateral edges (7, 7') of the flooring element (1, 1') in the connecting region (3) along the lateral edges (7, 7') in a vicinity of the edges (7, 7') are shaped or reshaped such that, when assembling the flooring elements (1, 1') to form a flooring (9), the transparent layer (10, 11, 12) of a flooring element (1, 1') is arranged to directly overlap the absorbing layer (10, 11, 12) of an adjacent flooring element (1', 1) and to be connected therewith materially bonded to each other.

11. Single-layer, areal flooring element (1, 1') comprising thermoplastic material for assembly to form a flooring (9) on a floor of a room of a building, **characterized in that** two adjacent flooring elements (1, 1') overlap in an region of their lateral edges (7, 7') such that one of the flooring elements (1, 1') covers the respective other flooring element (1, 1') at its surface only with a part of its total material thickness, the single layer (10") of the flooring element (1, 1') in a connecting region (3) along a lateral edge (7, 7') in a vicinity of its lateral edges (7, 7') is locally at least partially plasticizable directly and/or indirectly by energy input, wherein the lateral edges (7, 7') of the flooring element (1, 1') in the connecting region (3) are shaped or reshaped such that when assembling the flooring elements (1, 1') to form a flooring (9) the layer (10") of a flooring element (1, 1') is arranged to directly overlap the layer (10") of an adjacent flooring element (1', 1) and to be connected therewith materially bonded to each other, and the flooring element (1, 1') is adapted for performing the sealing/joining method according to any of the preceding claims 1 to 7.

## Revendications

1. Procédé d'étanchéification/de liaison d'au moins deux éléments de revêtement de sol (1, 1') plats, adjacents l'un à l'autre, en matière plastique, l'un avec l'autre le long de leurs bords latéraux (7, 7') tournés l'un vers l'autre, directement voisins et se touchant au moins partiellement, les éléments de revêtement de sol étant agencés à plat sur un sol dans une pièce d'un bâtiment, **caractérisé en ce qu'**on utilise en tant qu'éléments de revêtement de sol (1, 1') des éléments de revêtement de sol (1, 1') monocouches ou multicouches qui se chevauchent dans une zone de leurs bords latéraux (7, 7') de telle sorte qu'un élément de revêtement de sol (1, 1') recouvre un autre élément de revêtement de sol (1', 1) à sa surface uniquement avec une partie de son épaisseur de matériau totale, la température d'au moins l'un des éléments de revêtement de sol (1) adjacents l'un à l'autre étant temporairement augmentée localement par rapport à la température ambiante le long de ses bords latéraux (7) adjacents aux bords latéraux (7') d'un autre élément de revêtement de sol (1') dans un environnement de ses bords (7) par apport d'énergie dans une mesure telle qu'au moins une couche des éléments de revêtement de sol (1, 1') est au moins partiellement plastifiée localement dans une zone de liaison (3) le long de leurs bords latéraux (7, 7') directement voisins et se touchant au moins partiellement dans un environnement des bords (7, 7'), moyennant quoi l'un des éléments de revêtement de sol (1) est relié à l'autre élément de revêtement de sol (1') par liaison de matière, un rayonnement électromagnétique de la plage spectrale infrarouge étant utilisé pour l'augmentation locale de la température, et la surface totale commune des éléments de revêtement de sol (1, 1') ne présentant pas d'arêtes, de gradins et/ou de fentes à la fin du procédé d'étanchéification/de liaison, notamment dans la zone de liaison (3).

2. Procédé d'étanchéification/de liaison selon la revendication 1, **caractérisé en ce qu'**on utilise en tant qu'éléments de revêtement de sol (1, 1') des éléments de revêtement de sol (1, 1') multicouches avec au moins une couche de support (11) portant une couche décorative ainsi qu'une couche de couverture d'usure supérieure (12) protégeant la couche décorative (10), la température d'au moins l'un des éléments de revêtement de sol (1) adjacents l'un à l'autre étant temporairement augmentée localement par rapport à la température ambiante le long de ses bords latéraux (7) adjacents aux bords latéraux (7') d'un autre élément de revêtement de sol (1') dans un environnement de ses bords (7) par apport d'énergie dans une mesure telle qu'au moins une couche (10, 11, 12) des éléments de revêtement de sol (1, 1') est au moins partiellement plastifiée localement dans une zone de liaison (3) le long de leurs bords latéraux (7, 7') directement voisins et se touchant au moins partiellement dans un environnement des bords latéraux (7, 7'), l'un des éléments de revêtement de sol (1) étant relié directement ou indirectement à l'autre élément de revêtement de sol (1') par liaison de matière.

3. Procédé d'étanchéification/de liaison selon la revendication 1, **caractérisé en ce qu'**on utilise en tant qu'éléments de revêtement de sol (1, 1') des éléments de revêtement de sol (1, 1') monocouches, la température d'au moins l'un des éléments de revêtement de sol (1) adjacents l'un à l'autre étant temporairement augmentée localement par rapport à la température ambiante dans un environnement le long de ses bords latéraux (7) adjacents aux bords latéraux (7') d'un autre élément de revêtement de sol (1') par apport d'énergie directement ou indirectement dans une mesure telle que la couche des éléments de revêtement de sol (1, 1') est au moins partiellement plastifiée le long de leurs bords latéraux (7, 7') directement voisins et se touchant au moins partiellement dans un environnement des bords latéraux (7, 7'), l'un des éléments de revêtement de sol (1) étant directement relié à l'autre élément de revêtement de sol (1') par liaison de matière.

4. Procédé d'étanchéification/de liaison selon la revendication 2, **caractérisé en ce qu'**au moins l'un de deux éléments de revêtement de sol (1) adjacents l'un à l'autre présente, le long de ses bords latéraux (7) adjacents aux bords latéraux d'un autre élément de revêtement de sol (1'), au moins dans une zone de liaison (3), dans un environnement de ses bords (7), au moins une couche supérieure, transparente dans la plage spectrale infrarouge, en tant que couche de couverture d'usure (12) et au moins une couche inférieure, absorbant dans la plage spectrale infrarouge, en tant que couche de support (11), et **en ce que** les bords latéraux (7, 7') directement voisins et se touchant au moins partiellement des éléments de revêtement de sol (1, 1') sont formés ou post-formés dans la zone de liaison (3) le long des bords latéraux (7, 7') dans un environnement des bords (7, 7') de telle sorte, que lors de l'assemblage des éléments de revêtement de sol (1, 1') en un revêtement de sol (9), la couche transparente de l'un des éléments de revêtement de sol (1) est agencée de manière à recouvrir directement la couche absorbante de l'autre élément de revêtement de sol (1') et est reliée à celle-ci par liaison de matière.

5. Procédé d'étanchéification/de liaison selon la revendication 2 ou 3, **caractérisé en ce que** les bords latéraux (7, 7') directement voisins et se touchant au moins partiellement des éléments de revêtement de sol (1, 1') sont pourvus d'un chanfrein (8), d'un gradin (13, 15, 16) ou d'une rainure dans la zone de liaison (3) le long de leurs bords latéraux (7, 7') dans un environnement des bords latéraux (7, 7').

6. Procédé d'étanchéification/de liaison selon l'une quelconque des revendications 2 à 5 précédentes, **caractérisé en ce que** les bords latéraux (7, 7') directement voisins et se touchant au moins partiellement des éléments de revêtement de sol (1, 1') sont pourvus d'un revêtement (18) transparent ou absorbant dans la plage spectrale infrarouge dans la zone de liaison (3) le long de leurs bords latéraux (7, 7') dans un environnement des bords latéraux (7, 7').

7. Procédé d'étanchéification/de liaison selon l'une quelconque des revendications 1 à 6 précédentes, **caractérisé en ce que,** lors de la fabrication des éléments de revêtement de sol (1, 1'), des moyens de liaison par emboîtement (14, 14') ou des moyens de liaison par encliquetage (14, 14') sont réalisés le long des bords latéraux (7, 7') au moins sur un côté longitudinal et/ou au moins sur un côté de tête des éléments de revêtement de sol (1, 1') ; lors de l'assemblage des éléments de revêtement de sol (1, 1') en un revêtement de sol (9), les moyens de liaison par emboîtement(14, 14') étant amenés en engagement mutuel par glissement et les moyens de liaison par encliquetage (14, 14') par enclenchement.

8. Dispositif d'étanchéification/de liaison pour la mise en oeuvre du procédé selon l'une quelconque des revendications 1 à 7 précédentes, comprenant un châssis (20) destiné à se déplacer sur un revêtement de sol (9), des moyens (21) pour l'apport d'énergie au moyen d'un rayonnement électromagnétique de la plage proche infrarouge dans une zone de liaison (3) le long des bords latéraux (7, 7') dans un environnement des bords latéraux (7, 7') des éléments de revêtement de sol (1, 1'), un entraînement (22) pour déplacer de manière autonome le dispositif (19) sur le revêtement de sol (9), des moyens de commande (23) pour commander le déplacement du dispositif (19) sur le revêtement de sol (9) et au moins un capteur (24) pour détecter directement ou indirectement la position du châssis (20) sur le revêtement de sol (9), un capteur (25) pour détecter la température des éléments de revêtement de sol (1, 1') au moins dans une zone de liaison (3) et/ou des moyens de régulation (26) pour ajuster/réguler la température au moins dans une zone de liaison (3), **caractérisé par** une réalisation des moyens pour l'apport d'énergie (21) sous forme de projecteurs halogènes.

9. Élément de revêtement de sol (1, 1') multicouche, plat et présentant une matière plastique thermoplastique, destiné à être assemblé en un revêtement de sol (9) sur un sol d'une pièce d'un bâtiment, **caractérisé en ce que** deux éléments de revêtement de sol (1, 1') adjacents l'un à l'autre se chevauchent dans une zone de leurs bords latéraux (7, 7') de telle sorte que l'un des éléments de revêtement de sol (1, 1') recouvre l'autre élément de revêtement de sol (1, 1') à sa surface uniquement avec une partie de son épaisseur de matériau totale, et **en ce que** l'élément de revêtement de sol (1, 1') est réalisé pour mettre en oeuvre le procédé d'étanchéification/de liaison selon l'une quelconque des revendications 1 à 7 précédentes.

10. Élément de revêtement de sol multicouche (1, 1') selon la revendication 9, **caractérisé par** au moins une couche de support (11) portant une couche décorative (10), une couche de couverture d'usure supérieure (12) protégeant la couche décorative (11), au moins dans une zone de liaison (3) le long de ses bords latéraux (7, 7') dans un environnement des bords latéraux (7, 7') au moins une couche supérieure (10, 11, 12) transparente dans la plage spectrale infrarouge et au moins une couche inférieure (10, 11, 12) absorbant dans la plage spectrale infrarouge, au moins l'une des couches (10, 11, 12) de l'élément de revêtement de sol (1, 1') pouvant être au moins partiellement plastifiée localement dans une zone de liaison (3) de l'élément de revêtement de sol (1, 1') directement et/ou indirectement par apport d'énergie, et les bords latéraux (7, 7') de l'élément de revêtement de sol (1, 1') étant formés ou post-formés le long des bords latéraux (7, 7') au moins dans la zone de liaison (3) de telle sorte que lors de l'assemblage des éléments de revêtement de sol (1, 1') en un revêtement de sol (9), la couche transparente (10, 11, 12) d'un élément de revêtement de sol (1, 1') peut être agencée de manière à recouvrir directement la couche absorbante (10, 11, 12) d'un élément de revêtement de sol (1' 1) voisin et peut être reliée à celle-ci par liaison de matière.

11. Élément de revêtement de sol (1, 1') monocouche, plat et présentant une matière plastique thermoplastique, destiné à être assemblé en un revêtement de sol (9) sur un sol d'une pièce d'un bâtiment, **caractérisé en ce que** deux éléments de revêtement de sol (1, 1') adjacents l'un à l'autre se chevauchent dans une zone de leurs bords latéraux (7, 7') de telle sorte que l'un des éléments de revêtement de sol (1, 1') recouvre l'autre élément de revêtement de sol (1, 1') à sa surface uniquement avec une partie de son épaisseur de matériau totale, la couche (10") de l'élément de revêtement de sol (1, 1') peut être au moins partiellement plastifiée localement dans une zone de liaison (3) le long de ses bords latéraux (7, 7') dans un environnement de ses bords latéraux (7, 7') directement et/ou indirectement par apport d'énergie, les bords latéraux (7, 7') de l'élément de revêtement de sol (1, 1') étant formés ou post-formés dans la zone de liaison (3) de telle sorte que, lors de l'assemblage des éléments de revêtement de sol (1, 1') en un revêtement de sol (9), la couche (10") d'un élément de revêtement de sol (1, 1') peut être agencée de manière à recouvrir directement la couche (10") d'un élément de revêtement de sol (1', 1) voisin et peut être reliée par liaison de matière, et l'élément de revêtement de sol (1, 1') est réalisé pour la mise en oeuvre du procédé d'étanchéification/de liaison selon l'une des revendications 1 à 7 précédentes.
